(19) Europäisches Patentamt
European Patent Office
Office européen des brevets

(11) EP 4 718 560 A1

(12) EUROPEAN PATENT APPLICATION
published in accordance with Art. 153(4) EPC

(43) Date of publication:
**01.04.2026 Bulletin 2026/14**

(21) Application number: **23938951.3**

(22) Date of filing: **01.06.2023**

(51) International Patent Classification (IPC):
***H01M 10/0567*** *(2010.01)* ***H01M 10/0569*** *(2010.01)*
***H01M 10/0525*** *(2010.01)*

(52) Cooperative Patent Classification (CPC):
Y02E 60/10

(86) International application number:
**PCT/CN2023/097802**

(87) International publication number:
**WO 2024/243964 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology Co., Limited**
**Ningde, Fujian 352100 (CN)**

(72) Inventors:
- **LIU, Jiao**
  **Ningde, Fujian 352100 (CN)**
- **ZHANG, Limei**
  **Ningde, Fujian 352100 (CN)**
- **CHEN, Peipei**
  **Ningde, Fujian 352100 (CN)**
- **REN, Jiamo**
  **Ningde, Fujian 352100 (CN)**

(74) Representative: **Ziebig Hengelhaupt Intellectual Property Attorneys**
**Patentanwaltskanzlei PartGmbB**
**Leipziger Straße 49**
**10117 Berlin (DE)**

# (54) NON-AQUEOUS ELECTROLYTE FOR SECONDARY BATTERY, SECONDARY BATTERY AND ELECTRIC DEVICE

(57) The present application provides a non-aqueous electrolyte solution for a secondary battery, a secondary battery, and an electrical apparatus. The non-aqueous electrolyte solution for a secondary battery of the present application comprises an additive and a non-aqueous solvent, the non-aqueous solvent comprises dimethyl carbonate, and the additive comprises a cyclic sulfate compound as represented by formula (I);

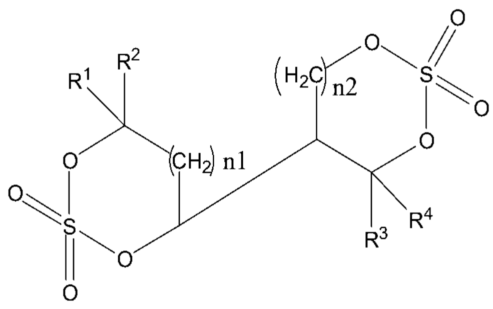

(I).

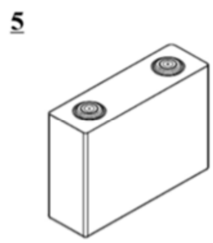

FIG. 1

EP 4 718 560 A1

## Description

### TECHNICAL FIELD

The present application relates to the technical field of lithium batteries, and particularly relates to a non-aqueous electrolyte solution for a secondary battery, a secondary battery, and an electrical apparatus.

### BACKGROUND

In recent years, as secondary batteries are increasingly widely applied in energy storage power systems, such as water, fire, wind, and solar power stations, as well as many fields, such as electric tools, electric bicycles, electric motorcycles, electric vehicles, military equipment, and aerospace. Due to great development of the secondary batteries, higher requirements are presented for, e.g., DCR, cycling performance, and storage performance thereof.

### SUMMARY OF THE INVENTION

In view of the above issues, an object of the present application is to provide a non-aqueous electrolyte solution for a secondary battery, a secondary battery, and an electrical apparatus, wherein the non-aqueous electrolyte solution of the present application is used to improve DCR of the battery, improve cycling performance and storage performance of the battery, reduce aerogenous quantity in cycles of the battery, and improve rate performance of the battery.

In order to achieve the above object, a first aspect of the present application provides a non-aqueous electrolyte solution for a secondary battery, comprising an additive and a non-aqueous solvent, wherein the non-aqueous solvent comprises dimethyl carbonate;

the additive comprises a cyclic sulfate compound represented by formula (I),

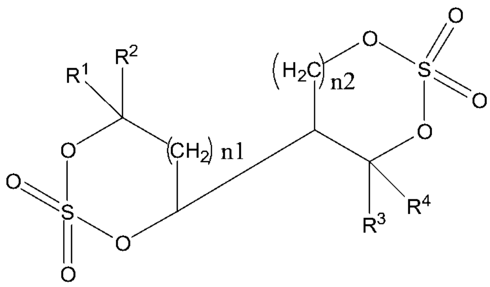

formula (I)

wherein $R^1$, $R^2$, $R^3$, and $R^4$ are each independently selected from any one of a radical having a structure represented by formula (II), a hydrogen atom, a halogen atom, a C1-C6 alkyl, a C1-C6 haloalkyl, a C1-C6 alkoxy, a C1-C6 haloalkoxy, a C2-C6 alkenyl, a C2-C6 ester radical, a cyano, and a sulfonyl, $n_1$ and $n_2$ are each independently any integer of 0-2,

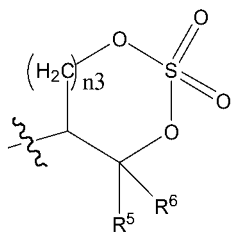

formula (II)

$R^5$ and $R^6$ are each independently selected from any one of a hydrogen atom, a halogen atom, a C1-C6 alkyl, a C1-C6 haloalkyl, a C1-C6 alkoxy, a C1-C6 haloalkoxy, a C2-C6 alkenyl, a C2-C6 ester radical, a cyano, and a sulfonyl, $n_3$ is any integer of 0-2; and

$R^1$ and $R^2$ are not simultaneously hydrogen atoms, and $R^3$ and $R^4$ are not simultaneously hydrogen atoms;
or $R^1$, $R^2$, $R^3$, $R^4$, $R^5$, and $R^6$ satisfy conditions below:
$R^1$ and $R^2$ are simultaneously hydrogen atoms, one of $R^3$ and $R^4$ is a hydrogen atom, and the other one is any one of a radical having a structure represented by general formula (II), a halogen atom, a C1-C6 alkyl, a C1-C6 haloalkyl, a C1-C6 alkoxy, a C1-C6 haloalkoxy, a C2-C6 alkenyl, a C2-C6 ester radical, a cyano, and a sulfonyl, and $R^5$ and $R^6$ in a radical having a structure represented by general formula (II) are not simultaneously hydrogen atoms;
or $R^1$, $R^2$, $R^3$, $R^4$, $R^5$, and $R^6$ satisfy conditions below:
$R^3$ and $R^4$ are simultaneously hydrogen atoms, one of $R^1$ and $R^2$ is a hydrogen atom, and the other one is any one of a radical having a structure represented by general formula (II), a halogen atom, a C1-C6 alkyl, a C1-C6 haloalkyl, a C1-C6 alkoxy, a C1-C6 haloalkoxy, a C2-C6 alkenyl, a C2-C6 ester radical, a cyano, and a sulfonyl, and $R^5$ and $R^6$ in a radical having a structure represented by general formula (II) are not simultaneously hydrogen atoms.

Therefore, in the present application, the non-aqueous electrolyte solution is formed by combining dimethyl carbonate with the additive. The non-aqueous electrolyte solution of the present application has better high-voltage resistance. During first charge of the battery, the additive forms a more stable inorganic-organic hybrid CEI film with stronger electron blocking ability on the surface of the positive electrode, thereby inhibiting side reactions between the electrolyte solution and the positive electrode, improving the DCR of the battery, improving the cycling performance and the storage performance of the battery, and reducing the aerogenous quantity in cycles of the battery. Dimethyl carbonate can reduce the viscosity of the electrolyte solution, improve the conductivity of the electrolyte solution, and then improve the rate performance of the battery.

In any embodiment, the cyclic sulfate compound has a structure represented by formula (I-1),

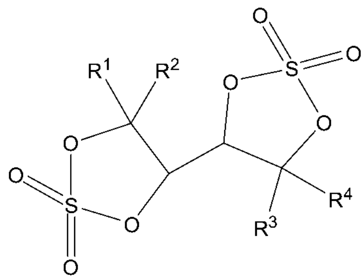

formula (I-1)

$R^1$, $R^2$, $R^3$, and $R^4$ are each independently selected from any one of a radical having a structure represented by formula (II-1), a hydrogen atom, a halogen atom, a C1-C6 alkyl, a C1-C6 haloalkyl, a C1-C6 alkoxy, a C1-C6 haloalkoxy, a C2-C6 alkenyl, a C2-C6 ester radical, a cyano, and a sulfonyl;

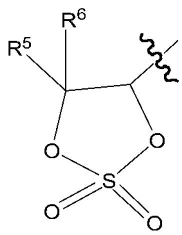

formula (II-1)

and $R^5$ and $R^6$ are each independently selected from any one of a hydrogen atom, a halogen atom, a C1-C6 alkyl, a C1-C6 haloalkyl, a C1-C6 alkoxy, a C1-C6 haloalkoxy, a C2-C6 alkenyl, a C2-C6 ester radical, a cyano, and a sulfonyl.

The cyclic sulfate rings in the above general formula (I-1) are all five-membered rings, which can form a more compact CEI film. Compared with a six-membered ring, the five-membered ring has a larger ring tension and tends to form a film at the positive electrode, while the six-membered ring has a smaller ring tension, and higher stability with slower film formation at the positive electrode. Therefore, the electron blocking CEI film is less efficiently generated, which affects the effect of the CEI film.

In any embodiment, $R^1$, $R^2$, $R^3$, and $R^4$ are each independently selected from any one of a radical having a structure represented by general formula (II-1), a hydrogen atom, a halogen atom, a C1-C3 alkyl, a C1-C3 haloalkyl, a C1-C3 alkoxy, a C1-C3 haloalkoxy, and a cyano; $R^5$ and $R^6$ are each independently selected from any one of a hydrogen atom, a halogen atom, a C1-C3 alkyl, a C1-C3 haloalkyl, a C1-C3 alkoxy, a C1-C3 haloalkoxy, and a cyano;

optionally, $R^1$, $R^2$, $R^3$, and $R^4$ are each independently selected from any one of a radical having a structure represented by general formula (II-1), a hydrogen atom, a halogen atom, a C1-C3 alkyl, a C1-C3 haloalkyl, a C1-C3 alkoxy, and a cyano; $R^5$ and $R^6$ are each independently selected from any one of a hydrogen atom, a halogen atom, a C1-C3 alkyl, a C1-C3 haloalkyl, a C1-C3 alkoxy, and a cyano;

more optionally, $R^1$, $R^2$, $R^3$, and $R^4$ are each independently selected from any one of a radical having a structure represented by general formula (II-1), a hydrogen atom, a F atom, a Cl atom, a Br atom, a methyl, an ethyl, a propyl, an isopropyl, a trifluoromethyl, an ethoxy, and a cyano; $R^5$ and $R^6$ are each independently selected from any one of a hydrogen atom, a F atom, a Cl atom, a Br atom, a methyl, an ethyl, a propyl, an isopropyl, a trifluoromethyl, an ethoxy, and a cyano; and

further optionally, the radical having a structure represented by general formula (II-1) is selected from any one of radicals below:

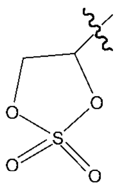 , 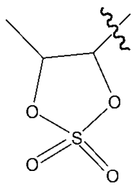 , 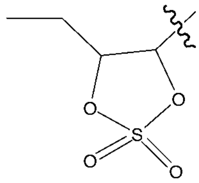 , 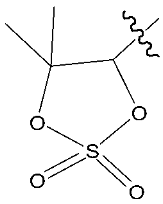 , 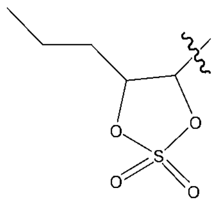 , 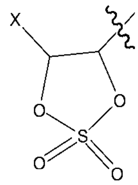 ,

or

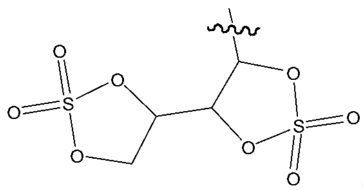 ,

wherein X is a F atom, a Cl atom, or a Br atom.

In any embodiment, $R^1$, $R^2$, $R^3$, and $R^4$ are each independently selected from any one of

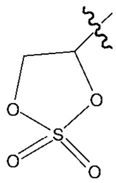 , 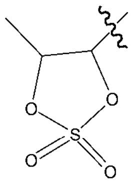 , 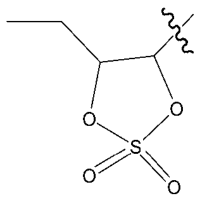 , 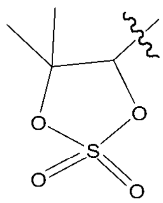 , 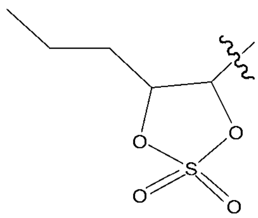 , 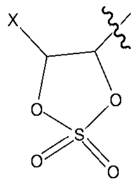 ,

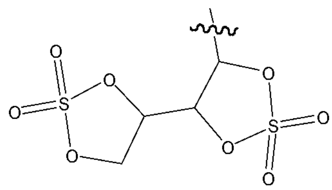 ;

, a hydrogen atom, a F atom, a Cl atom, a Br atom, a methyl, an ethyl, a propyl, an isopropyl, a trifluoromethyl, an ethoxy, and a cyano, and the X is a F atom; and

optionally, $R^1$, $R^2$, $R^3$, and $R^4$ are each independently selected from any one of

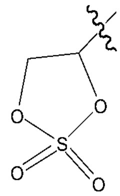 ,

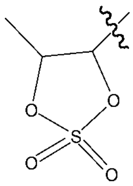 , 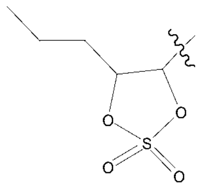 , 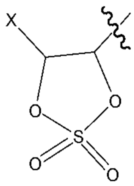 , 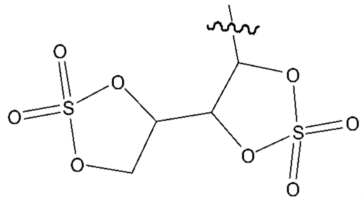 ,

a hydrogen atom, a F atom, a methyl, an ethyl, a propyl, a trifluoromethyl, an ethoxy, and a cyano, and the X is a F atom.

In any embodiment, the cyclic sulfate compound is selected from compounds below:

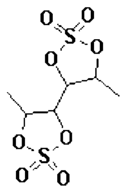 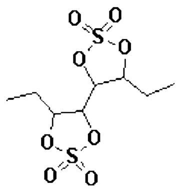 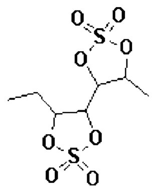 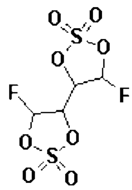 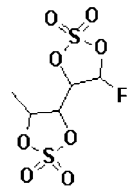

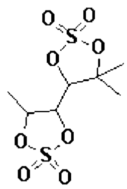 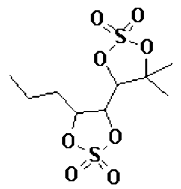 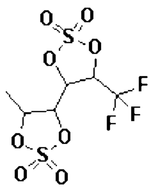 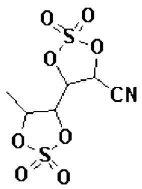 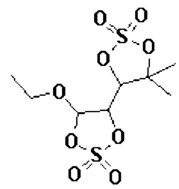

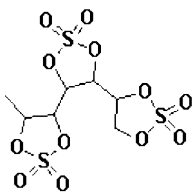 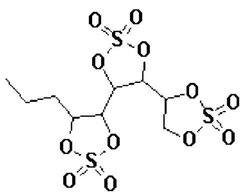 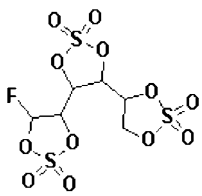 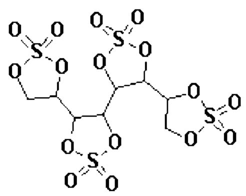 .

The preparation method of the above cyclic sulfate compound is simple, which is conducive to popularization and implementation in industry, and has a more stable improvement effect on the cycling performance of the battery.

In any embodiment, mass content of the additive in the non-aqueous electrolyte solution is 0.001%-15%, optionally 0.005%-10%, more optionally 0.05%-5%.

The mass content of the additive in the non-aqueous electrolyte solution within the above range can further improve high-voltage resistance of the electrolyte solution, further improve the stability and the electron blocking ability of the CEI film of the positive electrode to inhibit the side reactions between the electrolyte solution and the positive electrode, thereby improving the DCR of the battery, improving the cycling performance and the storage performance of the battery, and reducing the aerogenous quantity in cycles of the battery.

In any embodiment, mass content of the dimethyl carbonate in the non-aqueous solvent is 5%-80%, optionally 10%-70%, more optionally 20%-50%.

The mass content of the dimethyl carbonate in the non-aqueous solvent within the above range further improves the DCR of the battery, improves the cycling performance and the storage performance of the battery, reduces the aerogenous quantity in cycles of the battery, and further reduces the viscosity of the electrolyte solution, thereby improving the conductivity of the electrolyte solution, and improving the rate performance of the battery.

A second aspect of the present application further provides a battery, comprising the non-aqueous electrolyte solution in the first aspect of the present application, a positive electrode plate, and a negative electrode plate, wherein the

negative electrode plate comprises a negative electrode active material; and optionally, the secondary battery is a lithium secondary battery.

Therefore, in the present application, the non-aqueous electrolyte solution is formed by combining dimethyl carbonate with the additive. The electrolyte solution of the present application has better high-voltage resistance. During first charge of the battery, the additive forms a more stable inorganic-organic hybrid CEI film with stronger electron blocking ability on the surface of the positive electrode, thereby inhibiting side reactions between the electrolyte solution and the positive electrode, improving DCR of the battery, and improving cycling performance and storage performance of the battery. Dimethyl carbonate can reduce the viscosity of the electrolyte solution, improve the conductivity of the electrolyte solution, and then improve the rate performance of the battery.

In any embodiment, resistance of the positive electrode plate is less than or equal to 15 Ω, optionally less than or equal to 8 Ω.

Therefore, not only are the stability and safety of the battery system improved, but also the battery is enabled to have good kinetic performance, thereby improving the DCR of the battery, improving the cycling performance and the storage performance of the battery, reducing the aerogenous quantity in cycles of the battery, and improving the rate performance of the battery.

In any embodiment, volume average particle size Dv50 of the negative electrode active material 3-30 μm, optionally 6-20 μm, more optionally 8-15 μm.

The volume average particle size Dv50 of the negative electrode active material satisfying the above range is conducive to forming a stable SEI film on the surface of the negative electrode, reducing side reactions between the electrolyte solution and the negative electrode active material, reducing the aerogenous quantity in cycles of the battery, improving the cycling performance and the storage performance of the battery, improving the DCR of the battery, reducing the polarization degree of the battery, and improving the capacity utilization of the battery.

In any embodiment, the positive electrode plate comprises a positive electrode active material; optionally, the positive electrode active material comprises $Li_{1+x}Ni_aCo_bM_{1-a-b}O_{2-y}A_y$; wherein M comprises one or more elements among Mn, Fe, Cr, Ti, Zn, V, Al, Zr, Ce, Mg, Ga, Cu, and Nb, and optionally comprises one or two elements of Mn and Al; A comprises one or more elements among S, F, Cl, and I, and optionally comprises one or two elements of S and F; $-0.1 \leq x \leq 0.2$; $0<a<1$, optionally $0.5 \leq a<1$, more optionally $0.7 \leq a \leq 0.9$; $0<b<1$, optionally $0<b<0.5$, more optionally $0<b \leq 0.2$; $0<a+b<1$; and $0 \leq y<0.2$.

A third aspect of the present application provides an electrical apparatus, comprising the non-aqueous electrolyte solution for a secondary battery in the first aspect of the present application or the secondary battery in the second aspect of the present application.

## DESCRIPTION OF DRAWINGS

FIG. 1 is a schematic diagram of a secondary battery according to an embodiment of the present application.
FIG. 2 is an exploded view of the secondary battery according to an embodiment of the present application shown in FIG. 1.
FIG. 3 is a schematic diagram of a battery module according to an embodiment of the present application.
FIG. 4 is a schematic diagram of a battery pack according to an embodiment of the present application.
FIG. 5 is an exploded view of the battery pack according to an embodiment of the present application shown in FIG. 4.
FIG. 6 is a schematic diagram of an electrical apparatus in which a secondary battery is used as a power source according to an embodiment of the present application.

Description of reference numerals:
1. Battery pack; 2. Upper box; 3. Lower box; 4. Battery module; 5. Secondary battery; 51. Case; 52. Electrode assembly; 53. Top cover assembly.

## DETAILED DESCRIPTION

Embodiments of a non-aqueous electrolyte solution for a secondary battery, a secondary battery, a battery module, a battery pack, and an electrical apparatus of the present application are specifically disclosed below with reference to the detailed description of drawings as appropriate. However, there may be cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended

to limit the subject matter recited in the claims.

The "ranges" disclosed in the present application are defined in the form of lower and upper limits. A given range is defined by selecting a lower limit and an upper limit, and the selected lower and upper limits define the boundaries of the particular range. The range defined in this way may include or may not include end values, and may be arbitrarily combined, that is, any lower limit can be combined with any upper limit to form a range. For example, if the ranges 60-120 and 80-110 are listed for specific parameters, it is understood that the ranges 60-110 and 80-120 are also expected. In addition, if the listed minimum range values are 1 and 2 and if the listed maximum range values are 3, 4, and 5, the following ranges can all be expected: 1-3, 1-4, 1-5, 2-3, 2-4, and 2-5. In the present application, unless otherwise specified, the numerical range "a-b" represents an abbreviated representation of any combination of real numbers between a and b, where a and b are both real numbers. For example, the numerical range "0-5" indicates that all real numbers between "0-5" have been listed herein, and "0-5" is only a shortened representation of these numerical combinations. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all the embodiments and optional embodiments of the present application can be combined with each other form new technical solutions.

Unless otherwise specified, all technical features and optional technical features of the present application may be combined with each other to form new technical solutions.

If not specifically stated, all steps of the present application may be performed sequentially or randomly, preferably sequentially. For example, a method includes steps (a) and (b), meaning that the method may include steps (a) and (b) performed sequentially, or may include steps (b) and (a) performed sequentially. For example, the reference to the fact that the method may further include step (c), meaning that step (c) may be added to the method in any order. For example, the method may include steps (a), (b) and (c), or may further include steps (a), (c) and (b), or may further include steps (c), (a) and (b), and the like.

Unless otherwise specifically stated, "including" and "containing" mentioned in the present application may be open-ended, or may be closed-ended. For example, "including" and "containing" may indicate that it is possible to include or contain other components not listed, and it is also possible to include or contain only the listed components.

If not specifically stated, the term "or" is inclusive in the present application. For example, the phrase "A or B" means "A, B, or both A and B." More specifically, the condition "A or B" is satisfied under any one of the following conditions: A is true (or present) and B is false (or absent); A is false (or absent) and B is true (or present); or both A and B are true (or present).

Unless otherwise particularly stated, in the present application, the term "halogen" is an atom of a Group VIIA element, including, e.g., fluorine (F), chlorine (Cl), bromine (Br), iodine (I), and astatine (At).

Unless otherwise particularly stated, in the present application, the term "C1-C6 alkyl" refers to a linear or branched alkyl containing 1 to 6 carbon atoms, specifically including a C1-C3 alkyl and a C2-C4 alkyl, such as methyl, ethyl, n-propyl, isopropyl, n-butyl, isobutyl, sec-butyl, tert-butyl, n-pentyl, isopentyl, neopentyl, or n-hexyl.

Unless otherwise particularly stated, in the present application, the term "C1-C6 haloalkyl" refers to a C1-C6 alkyl with one or more H thereon substituted with halogen, wherein the "C1-C6 alkyl" and the "halogen" are as defined above, specifically including a C1-C3 haloalkyl and a C2-C4 haloalkyl, such as monofluoromethyl, difluoromethyl, trifluoromethyl, or 2,2,2-trifluoroethyl.

Unless otherwise particularly stated, in the present application, the term "C1-C6 alkoxy" refers to a radical C1-C6 alkyl-O-, wherein the "C1-C6 alkyl" is as described above. Non-limiting examples of an appropriate C1-C6 alkoxy include, e.g., methoxy, ethoxy, and isopropoxy.

Unless otherwise particularly stated, in the present application, the term "C1-C6 haloalkoxy" refers to a C1-C6 alkoxy with one or more H thereon substituted with halogen, wherein the "C1-C6 alkoxy" and the "halogen" are as defined above, specifically including a C1-C3 haloalkoxy and a C2-C4 haloalkoxy, such as difluoromethoxy, trifluoromethoxy, or 2,2,2-trifluoroethoxy.

Unless otherwise particularly stated, in the present application, the term "C2-C6 alkenyl" refers to a linear or branched monovalent hydrocarbon radical containing 2-6 carbon atoms and having at least one unsaturated carbon-carbon double bond, specifically including a C2-C5 alkenyl and a C2-C4 alkenyl, such as ethylene, propylene, n-butene, isobutylene, n-pentene, or isopentene.

Unless otherwise particularly stated, in the present application, the term "C2-C6 ester radical" refers to -COO-C1-C6 alkyl, wherein the "C1-C6 alkyl" is as described above, specifically including a C2-C5 ester radical and a C2-C4 ester radical, such as $-COOCH_3$ or $-COOCH_2CH_3$.

[Secondary battery]

A secondary battery also known as a rechargeable battery or a storage battery refers to a battery that can be used continually by activating an active material in a charging manner after the battery is discharged.

Generally, the secondary battery includes a positive electrode plate, a negative electrode plate, a separator and an electrolyte. During charging and discharging of the battery, active ions (e.g., lithium ions) are intercalated and deintercalated back and forth between the positive electrode plate and the negative electrode plate. The separator is arranged between the positive electrode plate and the negative electrode plate, and mainly functions to prevent a short circuit between the positive electrode and the negative electrode while allowing active ions to pass through. The electrolyte solution serves for conducting the active ions between the positive electrode plate and the negative electrode plate.

[Non-aqueous electrolyte solution for a secondary battery]

An embodiment of the present application provides a non-aqueous electrolyte solution for a secondary battery, comprising an additive and a non-aqueous solvent, wherein the non-aqueous solvent comprises dimethyl carbonate; and

the additive comprises a cyclic sulfate compound represented by formula (I),

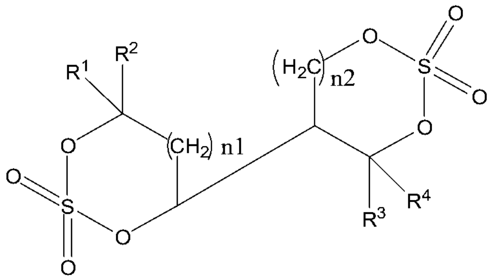

formula (I)

wherein $R^1$, $R^2$, $R^3$, and $R^4$ are each independently selected from any one of a radical having a structure represented by formula (II), a hydrogen atom, a halogen atom, a C1-C6 alkyl, a C1-C6 haloalkyl, a C1-C6 alkoxy, a C1-C6 haloalkoxy, a C2-C6 alkenyl, a C2-C6 ester radical, a cyano, and a sulfonyl, $n_1$ and $n_2$ are each independently any integer of 0-2, such as 0, 1, or 2;

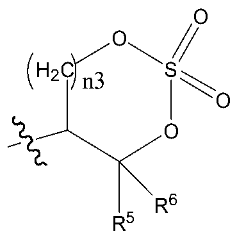

formula (II)

$R^5$ and $R^6$ are each independently selected from any one of a hydrogen atom, a halogen atom, a C1-C6 alkyl, a C1-C6 haloalkyl, a C1-C6 alkoxy, a C1-C6 haloalkoxy, a C2-C6 alkenyl, a C2-C6 ester radical, a cyano, and a sulfonyl, $n_3$ is any integer of 0-2, such as 0, 1, or 2; and
$R^1$ and $R^2$ are not simultaneously hydrogen atoms, and $R^3$ and $R^4$ are not simultaneously hydrogen atoms;
or $R^1$, $R^2$, $R^3$, $R^4$, $R^5$, and $R^6$ satisfy conditions below:
$R^1$ and $R^2$ are simultaneously hydrogen atoms, one of $R^3$ and $R^4$ is a hydrogen atom, and the other one is any one of a radical having a structure represented by general formula (II), a halogen atom, a C1-C6 alkyl, a C1-C6 haloalkyl, a C1-C6 alkoxy, a C1-C6 haloalkoxy, a C2-C6 alkenyl, a C2-C6 ester radical, a cyano, and a sulfonyl, and $R^5$ and $R^6$ in a radical having a structure represented by general formula (II) are not simultaneously hydrogen atoms;
or $R^1$, $R^2$, $R^3$, $R^4$, $R^5$, and $R^6$ satisfy conditions below:
$R^3$ and $R^4$ are simultaneously hydrogen atoms, one of $R^1$ and $R^2$ is a hydrogen atom, and the other one is any one of a radical having a structure represented by general formula (II), a halogen atom, a C1-C6 alkyl, a C1-C6 haloalkyl, a C1-C6 alkoxy, a C1-C6 haloalkoxy, a C2-C6 alkenyl, a C2-C6 ester radical, a cyano, and a sulfonyl, and $R^5$ and $R^6$ in a radical having a structure represented by general formula (II) are not simultaneously hydrogen atoms.

Although the mechanism is not clear, the applicant unexpectedly finds that: in the present application, the non-aqueous electrolyte solution is formed by combining dimethyl carbonate with the additive; the electrolyte solution of the present application has better high-voltage resistance, and during first charge of the battery, the additive forms a more stable inorganic-organic hybrid CEI film with stronger electron blocking ability on the surface of the positive electrode, thereby inhibiting the side reactions between the electrolyte solution and the positive electrode, improving the DCR of the battery, improving the cycling performance and the storage performance of the battery, and reducing the aerogenous quantity in cycles of the battery; and dimethyl carbonate can reduce the viscosity of the electrolyte solution, improve the conductivity of the electrolyte solution, and then improve the rate performance of the battery.

In some embodiments, the cyclic sulfate compound has a structure represented by formula (I-1),

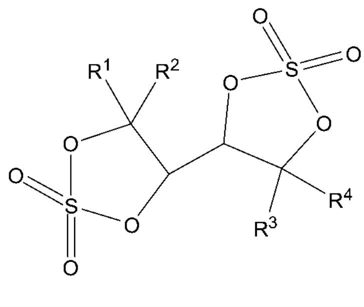

formula (I-1)

$R^1$, $R^2$, $R^3$, and $R^4$ are each independently selected from any one of a radical having a structure represented by formula (II-1), a hydrogen atom, a halogen atom, a C1-C6 alkyl, a C1-C6 haloalkyl, a C1-C6 alkoxy, a C1-C6 haloalkoxy, a C2-C6 alkenyl, a C2-C6 ester radical, a cyano, and a sulfonyl;

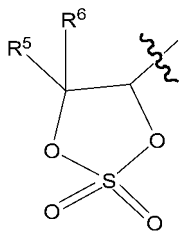

formula (II-1)

and $R^5$ and $R^6$ are each independently selected from any one of a hydrogen atom, a halogen atom, a C1-C6 alkyl, a C1-C6 haloalkyl, a C1-C6 alkoxy, a C1-C6 haloalkoxy, a C2-C6 alkenyl, a C2-C6 ester radical, a cyano, and a sulfonyl.

The cyclic sulfate rings in the above general formula (I-1) are all five-membered rings, which can form a more compact CEI film. Compared with a six-membered ring, the five-membered ring has a larger ring tension and tends to form a film at the positive electrode, while the six-membered ring has a smaller ring tension, and higher stability with slower film formation at the positive electrode. Therefore, the electron blocking CEI film is less efficiently generated, which affects the effect of the CEI film.

In some embodiments, $R^1$, $R^2$, $R^3$, and $R^4$ are each independently selected from any one of a radical having a structure represented by general formula (II-1), a hydrogen atom, a halogen atom, a C1-C3 alkyl, a C1-C3 haloalkyl, a C1-C3 alkoxy, a C1-C3 haloalkoxy, and a cyano; $R^5$ and $R^6$ are each independently selected from any one of a hydrogen atom, a halogen atom, a C1-C3 alkyl, a C1-C3 haloalkyl, a C1-C3 alkoxy, a C1-C3 haloalkoxy, and a cyano;

optionally, $R^1$, $R^2$, $R^3$, and $R^4$ are each independently selected from any one of a radical having a structure represented by general formula (II-1), a hydrogen atom, a halogen atom, a C1-C3 alkyl, a C1-C3 haloalkyl, a C1-C3 alkoxy, and a cyano; $R^5$ and $R^6$ are each independently selected from any one of a hydrogen atom, a halogen atom, a C1-C3 alkyl, a C1-C3 haloalkyl, a C1-C3 alkoxy, and a cyano;

more optionally, $R^1$, $R^2$, $R^3$, and $R^4$ are each independently selected from any one of a radical having a structure represented by general formula (II-1), a hydrogen atom, a F atom, a Cl atom, a Br atom, a methyl, an ethyl, a propyl, an isopropyl, a trifluoromethyl, an ethoxy, and a cyano; $R^5$ and $R^6$ are each independently selected from any one of a hydrogen atom, a F atom, a Cl atom, a Br atom, a methyl, an ethyl, a propyl, an isopropyl, a trifluoromethyl, an ethoxy,

and a cyano; and
further optionally, the radical having a structure represented by general formula (II-1) is selected from any one of radicals below:

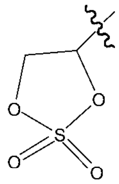 , 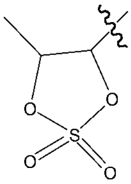 , 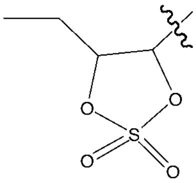 , 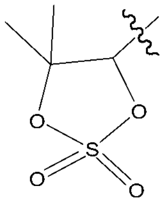 , 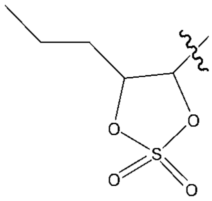 , 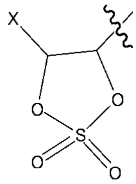 ,

or

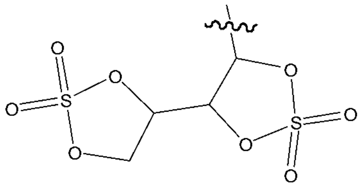 ,

wherein X is a F atom, a Cl atom, or a Br atom.

In some embodiments, $R^1$, $R^2$, $R^3$, and $R^4$ are each independently selected from any one of

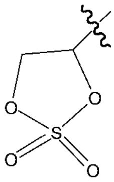 , 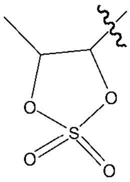 , 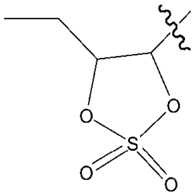 , 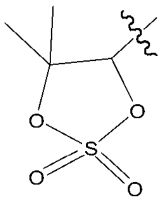 , 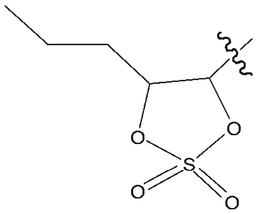 , 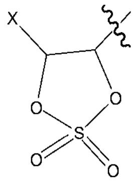 ,

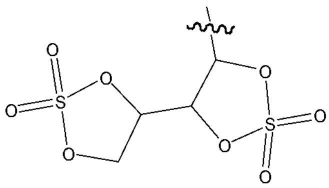 ,

a hydrogen atom, a F atom, a Cl atom, a Br atom, a methyl, an ethyl, a propyl, an isopropyl, a trifluoromethyl, an ethoxy, and a cyano, and the X is a F atom; and
optionally, $R^1$, $R^2$, $R^3$, and $R^4$ are each independently selected from any one of

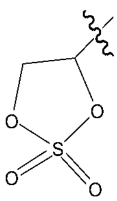 ,

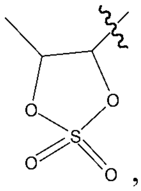 , 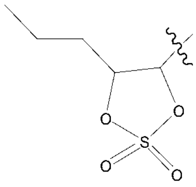 , 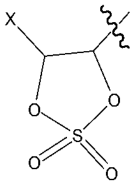 , 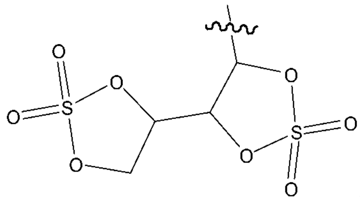 ,

a hydrogen atom, a F atom, a methyl, an ethyl, a propyl, a trifluoromethyl, an ethoxy, and a cyano, and the X is a F atom.

In some embodiments, the cyclic sulfate compound is selected from compounds below:

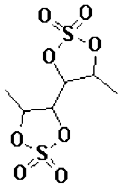 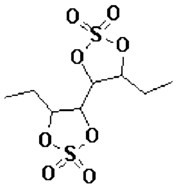 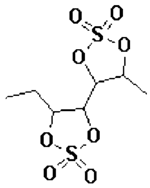 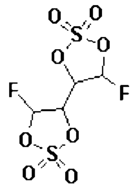 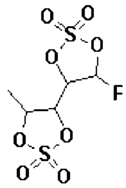

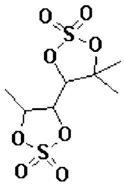 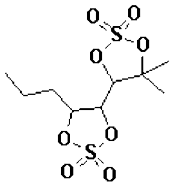 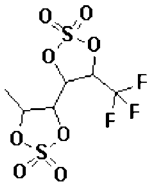 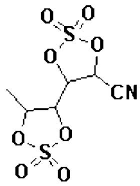 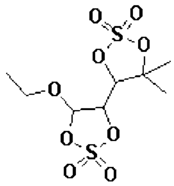

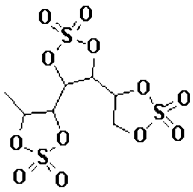 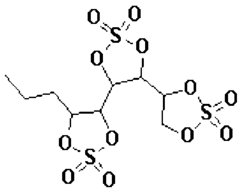 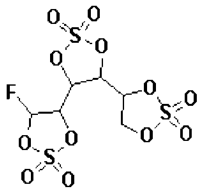 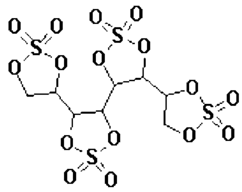 .

The preparation method of the above cyclic sulfate compound is simple, which is conducive to popularization and implementation in industry, and has a more stable improvement effect on the cycling performance of the battery.

The serial numbers of the above compounds are shown in the table below.

| Serial No. | Structural formula |
|---|---|
| Compound 1 | 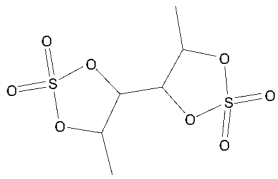 |
| Compound 2 | 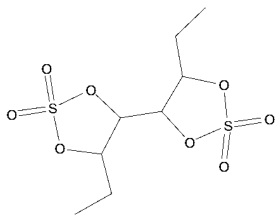 |

(continued)

| Serial No. | Structural formula |
|---|---|
| Compound 3 | 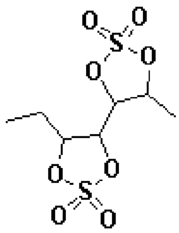 |
| Compound 4 | 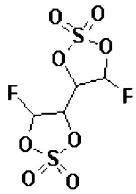 |
| Compound 5 | 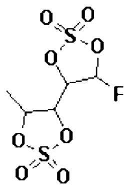 |
| Compound 6 | 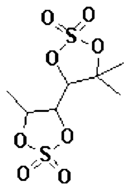 |
| Compound 7 | 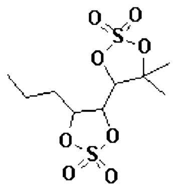 |
| Compound 8 | 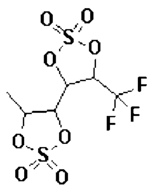 |
| Compound 9 | 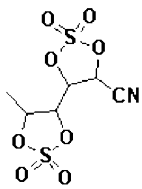 |
| Compound 10 | 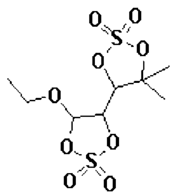 |

(continued)

| Serial No. | Structural formula |
| --- | --- |
| Compound 11 | 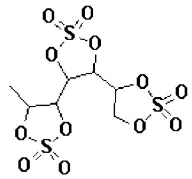 |
| Compound 12 | 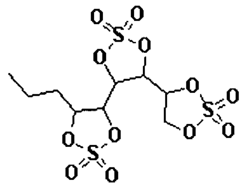 |
| Compound 13 | 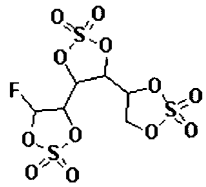 |
| Compound 14 | 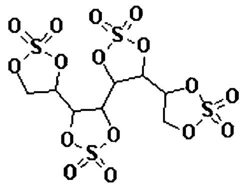 |

The following synthesis route is referred to for the preparation method of the cyclic sulfate ester compound having a structure represented by general formula (I) of the present application:

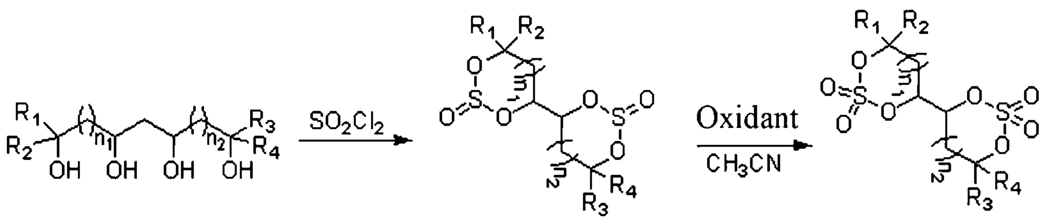


The reaction temperature in the first step is controlled at 30-60°C; and the reaction temperature in the second step is controlled at 10-30°C, wherein in the second step, a catalyst such as ruthenium trichloride trihydrate is used for catalysis, and an oxidant may be, e.g., sodium hypochlorite or ozone. $R^1$, $R^2$, $R^3$, $R^4$, n1, and n2 are as defined above.

In some embodiments, mass content of the additive in the non-aqueous electrolyte solution is 0.001%-15%, optionally 0.005%-10%, more optionally 0.05%-5%, such as 0.001%, 0.003%, 0.005%, 0.01%, 0.05%, 0.1%, 0.5%, 0.8%, 1%, 2%, 3%, 5%, 7%, 8%, 9%, 10%, 11%, 12%, 13%, 15%, and a range consisting of any of the above values.

The mass content of the additive in the non-aqueous electrolyte solution within the above range can further improve high-voltage resistance of the electrolyte solution, further improve the stability and the electron blocking ability of the CEI film of the positive electrode to inhibit the side reactions between the electrolyte solution and the positive electrode, thereby improving the DCR of the battery, improving the cycling performance and the storage performance of the battery, and reducing the aerogenous quantity in cycles of the battery.

In some embodiments, mass content of the dimethyl carbonate in the non-aqueous solvent is 5%-80%, optionally 10%-70%, more optionally 20%-50%, such as 5%, 10%, 20%, 30%, 40%, 50%, 60%, 70%, 80%, and a range consisting of any of the above values.

The mass content of the dimethyl carbonate in the non-aqueous solvent within the above range can further improve the DCR of the battery, improve the cycling performance and the storage performance of the battery, reduce the

aerogenous quantity in cycles of the battery, further reduce the viscosity of the electrolyte solution, improve the conductivity of the electrolyte solution, and improve the rate performance of the battery.

In some embodiments, the electrolyte comprises an electrolyte salt and other solvents.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalate)borate, lithium difluorobis(oxalato)phosphate, and lithium tetrafluoro(oxalato)phosphate.

In some embodiments, the other solvents may be selected from, e.g., at least one of ethylene carbonate, propylene carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte solution further optionally comprises other additives. As an example, the other additives may include a negative electrode film-forming additive, and may further include an additive that can improve some performances of the battery, such as an additive that improves the overcharge performance of the battery or an additive that improves the high-temperature or low-temperature performance of the battery.

[Positive electrode plate]

The positive electrode plate generally comprises a positive electrode current collector and a positive electrode film layer arranged on at least one surface of the positive electrode current collector, and the positive electrode film layer comprises the positive electrode active material.

As an example, the positive electrode current collector has two surfaces opposite in its own thickness direction, and the positive electrode film layer is arranged on any one or both of the two opposite surfaces of the positive electrode current collector.

In some embodiments, resistance of the positive electrode plate is less than or equal to 15 Ω, optionally less than or equal to 8 Ω, such as 0.5 Ω, 1 Ω, 2 Ω, 3 Ω, 4 Ω, 5 Ω, 6 Ω, 8 Ω, 9 Ω, 10 Ω, 11 Ω, 12 Ω, 13 Ω, 14 Ω, 15 Ω, and a range consisting of any of the above values.

Therefore, not only are the stability and safety of the battery system improved, but also the battery is enabled to have good kinetic performance, thereby improving the DCR of the battery, improving the cycling performance and the storage performance of the battery, reducing the aerogenous quantity in cycles of the battery, and improving the rate performance of the battery.

In some embodiments, the resistance of the positive electrode plate is tested using a conventional method in the art, for example, tested as follows:

the secondary battery is charged to a full charge voltage of 4.3V at a constant current of 0.33C, and then charged to a cut-off current of 0.055C at a constant voltage of the full charge voltage, so that the secondary battery reaches a fully charged state; the secondary battery is disassembled to provide the positive electrode plate; and the positive electrode plate is transferred into a baking oven at 140°C for 60 min, then cooled to 25°C, sealed, and transferred for testing;

the resistance of the above positive electrode plate at 25°C is tested using a film resistance tester (e.g., model BER1200) under test conditions of: pressure head area 153.94 $mm^2$, pressure 3.5 t, holding time 50 s. The electrode plate is tested at a plurality of (e.g., 15) points with adjacent test points spaced 2 mm-3 mm apart. The resistances at all of the test points are recorded, and the average value is calculated as resistance R of the positive electrode plate.

In some embodiments, a metal foil or a composite current collector may be used as the positive electrode current collector. For example, an aluminum foil may be used as the metal foil. The composite current collector may comprise a polymer material substrate layer and a metal layer formed on at least one surface of the polymer material substrate layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene (PP), polyethylene terephthalate (PET), polybutylene terephthalate (PBT), polystyrene (PS), or polyethylene (PE)).

In some embodiments, the positive electrode active material may be a positive electrode active material for batteries well known in the art. As an example, the positive electrode active material may comprise at least one of the following materials: a lithium-comprising phosphate of olivine structure, a lithium transition metal oxide, and a respective modified compound thereof. However, the present application is not limited to these materials, and other conventional materials that can be used as positive electrode active materials for batteries may also be used. Only a single one of or a combination of two or more of these positive electrode active materials can be used. Examples of lithium transition metal oxides may include, but are not limited to, at least one of a lithium-cobalt oxide (such as $LiCoO_2$), a lithium-nickel oxide

(such as $LiNiO_2$), a lithium-manganese oxide (such as $LiMnO_2$ or $LiMn_2O_4$), a lithium-nickel-cobalt oxide, a lithium-manganese-cobalt oxide, a lithium-nickel-manganese oxide, a lithium-nickel-cobalt-manganese oxide (such as $LiNi_{1/3}Co_{1/3}Mn_{1/3}O_2$ (also abbreviated as $NCM_{333}$), $LiNi_{0.5}Co_{0.2}Mn_{0.3}O_2$ (also abbreviated as $NCMs_{23}$), $LiNi_{0.5}Co_{0.25}Mn_{-0.25}O_2$ (also abbreviated as $NCM_{211}$), $LiNi_{0.6}Co_{0.2}Mn_{0.2}O_2$ (also abbreviated as $NCM_{622}$), $LiNi_{0.8}Co_{0.1}Mn_{0.1}O_2$ (also abbreviated as $NCM_{811}$)), a lithium-nickel-cobalt-aluminum oxide (such as $LiNi_{0.85}Co_{0.15}Al_{0.05}O_2$), and a modified compound thereof. Examples of the lithium-containing phosphate of olivine structure may include, but are not limited to, at least one of a lithium iron phosphate (e.g., $LiFePO_4$ (or abbreviated as LFP)), a lithium iron phosphate-carbon composite material, a lithium manganese phosphate (e.g., $LiMnPO_4$), a lithium manganese phosphate-carbon composite material, a lithium iron manganese phosphate, and a lithium iron manganese phosphate-carbon composite material.

In some embodiments, the positive electrode active material comprises $Li_{1+x}Ni_aCo_bM_{1-a-b}O_{2-y}A_y$; wherein M comprises one or more elements among Mn, Fe, Cr, Ti, Zn, V, Al, Zr, Ce, Mg, Ga, Cu, and Nb, and optionally comprises one or two elements of Mn and Al; A comprises one or more elements among S, F, Cl, and I, and optionally comprises one or two elements of S and F; $-0.1 \leq x \leq 0.2$; $0<a<1$, optionally $0.5 \leq a<1$, more optionally $0.7 \leq a \leq 0.9$; $0<b<1$, optionally $0<b<0.5$, more optionally $0<b \leq 0.2$; $0<a+b<1$; and $0 \leq y<0.2$.

In some embodiments, the positive electrode film layer further optionally comprises a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorine-containing acrylate resin.

In some embodiments, the positive electrode film layer further optionally includes a conductive agent. As an example, the conductive agent may include at least one of superconducting carbon, acetylene black, carbon black, Ketjen black, carbon dot, carbon nanotube, graphene, and carbon nanofiber.

In some embodiments, the positive electrode plate may be prepared by: dispersing the above components, such as the positive electrode active material, the conductive agent, the binder and any other component, for preparing the positive electrode plate in a solvent (such as N-methyl pyrrolidone) to form a positive electrode slurry; and coating the positive electrode slurry on the positive electrode current collector, and performing drying and cold pressing processes to obtain the positive electrode plate.

[Negative electrode plate]

The negative electrode plate includes a negative electrode current collector and a negative electrode film layer arranged on at least one surface of the negative electrode current collector, where the negative electrode film layer includes a negative electrode active material.

As an example, the negative electrode current collector has two surfaces opposite in its own thickness direction, and the negative electrode film layer is arranged on any one or both of the two opposite surfaces of the negative electrode current collector.

In some embodiments, volume average particle size Dv50 of the negative electrode active material is 3-30 μm, optionally 6-20 μm, more optionally 8-15 μm, such as 3 μm, 4 μm, 5 μm, 6 μm, 7 μm, 8 μm, 9 μm, 10 μm, 12 μm, 13 μm, 15 μm, 17 μm, 18 μm, 20 μm, 21 μm, 22 μm, 23 μm, 25 μm, 27 μm, 28 μm, 30 μm, and a range consisting of any of the above values.

The volume average particle size Dv50 of the negative electrode active material satisfying the above range is conducive to forming a stable SEI film on the surface of the negative electrode, reducing side reactions between the electrolyte solution and the negative electrode active material, reducing the aerogenous quantity in cycles of the battery, improving the cycling performance and the storage performance of the battery, improving the DCR of the battery, reducing the polarization degree of the battery, and improving the capacity utilization of the battery.

The volume average particle size Dv50 represents a corresponding particle size when cumulative volume distribution percentage of the negative electrode active material reaches 50%. In some embodiments, the volume average particle size Dv50 is tested using an instrument and a method known in the art, for example, may be measured using a laser particle size analyzer (e.g., Master Size 300) with reference to GB/T 19077-2016 Particle size analysis-Laser diffraction methods.

In some embodiments, a metal foil or a composite current collector may be used as the negative electrode current collector. For example, a copper foil may be used as the metal foil. The composite current collector can comprise a polymer material substrate layer and a metal layer formed on at least one surface of the polymer material substrate. The composite current collector can be formed by forming a metal material (copper, copper alloy, nickel, nickel alloy, titanium, titanium alloy, silver, and silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, a negative electrode active material for the battery well known in the art may be used as the negative electrode active material. As an example, the negative electrode active material may include at least one of the following materials: artificial graphite, natural graphite, soft carbon, hard carbon, silicon-based material, tin-based

material, lithium titanate, etc. The silicon-based material may be selected from at least one of elemental silicon, silicon-oxygen compound, silicon-carbon complex, silicon-nitrogen complex, and silicon alloy. The tin-based material may be selected from at least one of elemental tin, tin-oxygen compound, and tin alloy. However, the present application is not limited to these materials, and other conventional materials useful as negative electrode active materials for batteries can also be used. These negative electrode active materials may be used alone or in a combination of two or more thereof.

In some embodiments, the negative electrode film layer further optionally include a binder. As an example, the binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

In some embodiments, the negative electrode film layer further optionally includes a conductive agent. As an example, the conductive agent may be selected from at least one of superconducting carbon, acetylene black, carbon black, Ketjen black, carbon dot, carbon nanotube, graphene, and carbon nanofiber.

In some embodiments, the negative electrode film layer further optionally includes other adjuvants, for example, a thickener (such as sodium carboxymethyl cellulose (CMC-Na)).

In some embodiments, the negative electrode plate may be prepared by: dispersing the above components, such as the negative electrode active material, the conductive agent, the binder and any other component, for preparing the negative electrode plate in a solvent (such as deionized water) to form a negative electrode slurry; and coating the negative electrode slurry on the negative electrode current collector, and performing drying and cold pressing processes to obtain the negative electrode plate.

[Separator]

In some embodiments, the secondary battery further comprises a separator. The type of the separator is not particularly limited in the present application, and any well-known separator with a porous structure having good chemical stability and mechanical stability can be selected.

In some embodiments, the material of the separator can be selected from at least one of glass fibers, non-woven fabric, polyethylene, polypropylene, and polyvinylidene fluoride. The separator can be either a single-layer thin film or a multilayer composite thin film without special limitations. When the separator is a multilayer composite thin film, the materials of the layers can be the same or different without special limitations.

In some embodiments, the positive electrode plate, the negative electrode plate, and the separator can be made into an electrode assembly by a winding process or a lamination process.

In some embodiments, the secondary battery can comprise an outer package. The outer packaging can be used for encapsulating the above electrode assembly and electrolyte.

In some embodiments, the outer package of the secondary battery can be a hard shell, such as a hard plastic shell, an aluminum shell, or a steel shell. The outer package of the secondary battery can also be a soft package, such as a pouch-type soft package. The material of the soft package can be plastic, and examples of the plastic can include polypropylene, polybutylene terephthalate, polybutylene succinate, etc.

The shape of the secondary battery is not particularly limited in the present application, and may be a cylinder, a square, or any other shape. For example, FIG. 1 shows a secondary battery 5 with a square structure as an example.

In some embodiments, referring to FIG. 2, the outer package may comprise a case 51 and a cover plate 53. Here, the case 51 can include a bottom plate and a side plate connected to the bottom plate, with the bottom plate and the side plate enclosing to form an accommodating cavity. The case 51 has an opening in communication with the accommodating cavity, and the cover plate 53 can cover the opening to close the accommodating cavity. The positive electrode plate, the negative electrode plate, and the separator can be wound or laminated to form an electrode assembly 52. The electrode assembly 52 is encapsulated within the accommodating cavity. The electrolyte infiltrates the electrode assembly 52. The number of electrode assemblies 52 comprised in the secondary battery 5 may be one or more, and may be selected by those skilled in the art according to specific actual requirements.

In some embodiments, the secondary batteries may be assembled into a battery module, the number of secondary batteries comprised in the battery module may be one or more, and the specific number may be selected by those skilled in the art according to the application and capacity of the battery module.

Fig. 3 shows a battery module 4 as an example. Referring to Fig. 3, in the battery module 4, a plurality of secondary batteries 5 can be sequentially arranged along the length direction of the battery module 4. Of course, any other arrangements are also possible. The plurality of secondary batteries 5 may further be fixed by fasteners.

Optionally, the battery module 4 may further comprise a shell having an accommodating space, in which the plurality of secondary batteries 5 is accommodated.

In some embodiments, the above battery modules may be further assembled into a battery pack, the number of battery modules included in the battery pack may be one or more, and the specific number may be selected by those skilled in the art based on the application and capacity of the battery pack.

Figs. 4 and 5 show a battery pack 1 as an example. Referring to FIGs. 4 and 5, the battery pack 1 may comprise a battery box and a plurality of battery modules 4 provided in the battery box. The battery box comprises an upper box body 2 and a lower box body 3, wherein the upper box body 2 can cover the lower box body 3 to form an enclosed space for accommodating the battery module 4. The plurality of battery modules 4 may be arranged in the battery box in any manner.

In addition, the present application further provides an electrical apparatus. The electrical apparatus includes at least one of the secondary battery, the battery module, or the battery pack provided in the present application. The secondary battery, the battery module, or the battery pack may be used as a power source for the electrical apparatus, and may also be used as an energy storage unit for the electrical apparatus. The electrical apparatus may include a mobile device (e.g., a mobile phone, a laptop, etc.), an electric vehicle (e.g., all-electric vehicle, a hybrid electric vehicle, a plug-in hybrid electric vehicle, an electric bicycle, an electric scooter, an electric golf cart, an electric truck, etc.), an electric train, a ship and a satellite, and an energy storage system, etc., but is not limited thereto.

For the electrical apparatus, the secondary battery, the battery module, or the battery pack can be selected according to its use requirements.

FIG. 6 shows an electrical apparatus as an example. The electrical apparatus is an all-electric vehicle, a hybrid electric vehicle, a plug-in hybrid electric vehicle, or the like. In order to meet the requirements of the electrical apparatus for high power and high energy density of a secondary battery, a battery pack or a battery module may be used.

[Examples]

Examples of the present application will be described below. The embodiments described below are illustrative and only used to explain the present application, and cannot be construed as limiting the present application. Embodiments in which techniques or conditions are not specified are implemented based on the techniques or conditions described in literatures of the art or based on the product manuals. Where manufacturers are not specified, the employed reagents or instruments are all commercially available conventional products. Information of other reagents or compounds is recorded in Table 1.

Table 1

| Material | Structural formula | CAS number |
|---|---|---|
| 1,6-dideoxygalactitol | 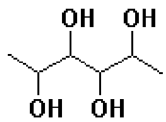 | 25289-20-7 |
| 3,4,5,6-octanetetrol | 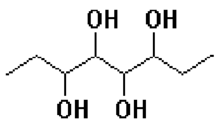 | 2165939-88-6 |
| 2,3,4,5-heptanetetrol | 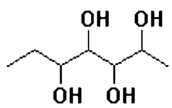 | 2629309-49-3 |
| 1,2,3,4,5,6-heptanehexol | 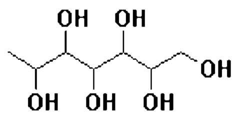 | 688007-16-1 |
| Octitol | 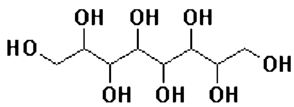 | 63976-32-9 |
| Comparative compound 1 | 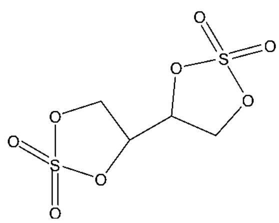 | 1431298-10-0 |

(continued)

| Material | Structural formula | CAS number |
|---|---|---|
| Comparative compound 2 | 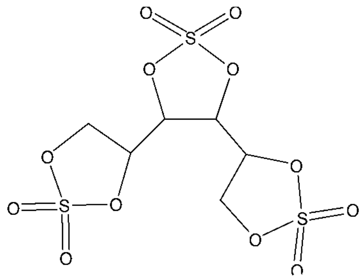 | 2793408-99-6 |

**Preparative example 1:** Synthesis of compound 1

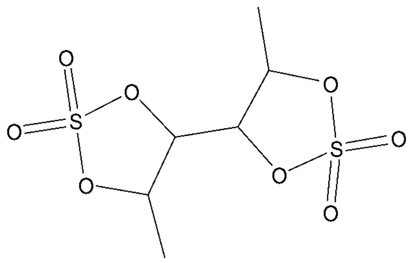

Step 1: 300 g (2 mol) of solid 1,6-dideoxygalactitol was added into a 2 L three-necked flask, and 523 g (4.4 mol) of sulfoxide chloride was added dropwise into the three-necked flask while stirring at a controlled temperature of about 15°C during the dropwise addition. After the dropwise addition was complete, the mixture was kept at 45°C for reaction for 4 h, so that a large amount of pasty solid precipitated from the reaction mixture. After cooling, 1 L of deionized water was slowly added dropwise. The reaction system was scattered by quickly stirring, and filtered. The resulting solid was slurried and washed with deionized water many times until the pH was neutral. The filter cake was dried under reduced pressure at 60°C to obtain an intermediate product.

Step 2: 184.2 g (0.8 mol) of intermediate product 1 was added into a 3 L three-necked flask, to which 1,000 mL of acetonitrile was added, and 80 mg of a catalyst ruthenium trichloride trihydrate was added. After nitrogen replacement of the system, the system was cooled to 20 °C, to which 2,000 g of 20% aqueous solution of sodium hypochlorite was added dropwise within 1 h while stirring, and the mixture was controlled at a reaction temperature of 10-20°C; after the dropwise addition was complete, the mixture was stirred at 10-20°C for 10 min for liquid separation, and the organic phase was quenched with an aqueous solution of sodium sulfite until the potassium iodide-starch test paper did not turn blue; and after liquid separation again, the organic layer was concentrated, and crystallized with acetonitrile to provide the above compound 1 as a white powder solid.

1H-NMR, $CD_3CN$, $\delta$ ppm 5.42-5.39 (m, 2H), 5.36-5.34 (m, 2H), 1.67-1.65 (d, 6H).

**Preparative** example 2: Synthesis of compound 2

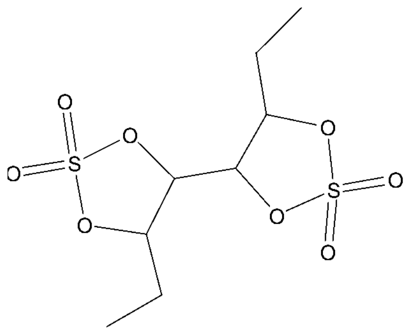

Step 1: 356.5 g (2 mol) of solid 3,4,5,6-octanetetrol was added into a 2 L three-necked flask, and 523 g (4.4 mol) of sulfoxide chloride was added dropwise into the three-necked flask while stirring at a controlled temperature of about 15°C during the dropwise addition. After the dropwise addition was complete, the mixture was kept at 45°C for reaction for 4 h, so that a large amount of pasty solid precipitated from the reaction mixture. After cooling, 1 L of deionized water was slowly added dropwise. The reaction system was scattered by quickly stirring, and filtered. The resulting solid was slurried and washed with deionized water many times until the pH was neutral. The filter cake was dried under reduced pressure at 60°C to obtain an intermediate product.

Step 2: 216.2 g (0.8 mol) of intermediate product 1 was added into a 3 L three-necked flask, to which 1,000 mL of acetonitrile was added, and 80 mg of a catalyst ruthenium trichloride trihydrate was added. After nitrogen replacement of the system, the system was cooled to 20 °C, to which 2,000 g of 20% aqueous solution of sodium hypochlorite was added dropwise within 1 h while stirring, and the mixture was controlled at a reaction temperature of 10-20°C; after the dropwise addition was complete, the mixture was stirred at 10-20°C for 10 min for liquid separation, and the organic phase was quenched with an aqueous solution of sodium sulfite until the potassium iodide-starch test paper did not turn blue; and after liquid separation again, the organic layer was concentrated, and crystallized with acetonitrile to provide the compound 2.

**Preparative example 3:** Synthesis of compound 3

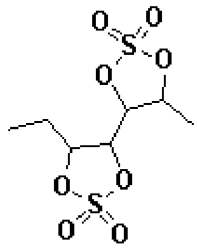

Step 1: 328.4 g (2 mol) of solid 2,3,4,5-heptanetetrol was added into a 2 L three-necked flask, and 523 g (4.4 mol) of sulfoxide chloride was added dropwise into the three-necked flask while stirring at a controlled temperature of about 15°C during the dropwise addition. After the dropwise addition was complete, the mixture was kept at 45°C for reaction for 4 h, so that a large amount of pasty solid precipitated from the reaction mixture. After cooling, 1 L of deionized water was slowly added dropwise. The reaction system was scattered by quickly stirring, and filtered. The resulting solid was slurried and washed with deionized water many times until the pH was neutral. The filter cake was dried under reduced pressure at 60°C to obtain an intermediate product.

Step 2: 205 g (0.8 mol) of intermediate product 1 was added into a 23 L three-necked flask, to which 1,000 mL of acetonitrile was added, and the mixture was stirred until the solid was fully dissolved. 80 mg of a catalyst ruthenium trichloride trihydrate was added. After nitrogen replacement of the system, the system was cooled to 20 °C, to which 2,000 g of 20% aqueous solution of sodium hypochlorite was added dropwise within 1 h while stirring, and the mixture was controlled at a reaction temperature of 10-20°C; after the dropwise addition was complete, the mixture was stirred at 10-20°C for 10 min for liquid separation, and the organic phase was quenched with an aqueous solution of sodium sulfite until the potassium iodide-starch test paper did not turn blue; and after liquid separation again, the organic layer was concentrated, and crystallized with acetonitrile to provide the compound 3 (163.1 g, yield: 82.8%).

**Preparative example 4:** Synthesis of compound 9

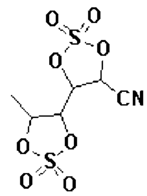

This example is same as Preparative Example 1 except that 1,6-dideoxygalactitol was replaced with

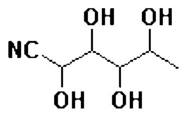

(CAS No.: 7460-93-7). Compound LC-MS: 285.25.

**Preparative example 5:** Synthesis of compound 11

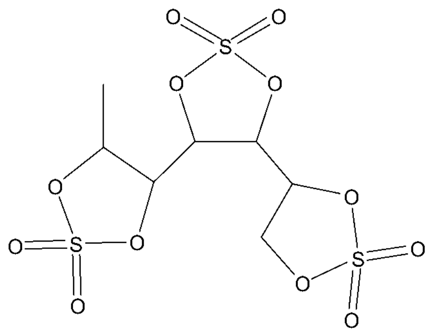

Step 1: 392.4 g (2 mol) of solid 1,2,3,4,5,6-heptanehexol was added into a 2 L three-necked flask, and 784.5 g (6.6 mol) of sulfoxide chloride was added dropwise into the three-necked flask while stirring at a controlled temperature of about 15°C during the dropwise addition. After the dropwise addition was complete, the mixture was kept at 45°C for reaction for 4 h, so that a large amount of pasty solid precipitated from the reaction mixture. After cooling, 1 L of deionized water was slowly added dropwise. The reaction system was scattered by quickly stirring, and filtered. The resulting solid was slurried and washed with deionized water many times until the pH was neutral. The filter cake was dried under reduced pressure at 60°C to obtain an intermediate product.

Step 2: 140 g (0.4 mol) of intermediate product 1 was added into a 4 L three-necked flask, to which 1,000 mL of acetonitrile was added, and 110 mg of a catalyst ruthenium trichloride trihydrate was added. After nitrogen replacement of the system, the system was cooled to 20 °C, to which 1,500 g of 20% aqueous solution of sodium hypochlorite was added dropwise within 1 h while stirring, and the mixture was controlled at a reaction temperature of 10-20°C; after the dropwise addition was complete, the mixture was stirred at 10-20°C for 10 min for liquid separation, and the organic phase was quenched with an aqueous solution of sodium sulfite until the potassium iodide-starch test paper did not turn blue; and after liquid separation again, the organic layer was concentrated, and crystallized with acetonitrile to provide the compound 11.

**Preparative** example 6: Synthesis of compound 14

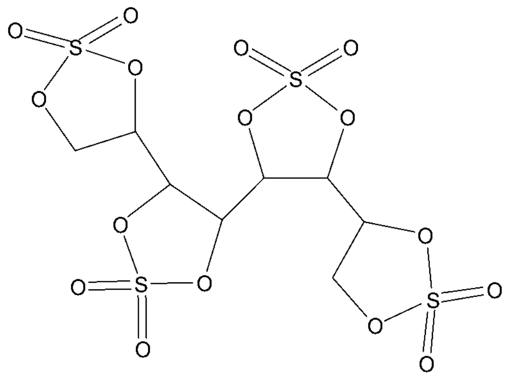

Step 1: 484 g (2 mol) of solid octitol was added into a 2 L three-necked flask, and 1,046 g (8.8 mol) of sulfoxide chloride was added dropwise into the three-necked flask while stirring at a controlled temperature of about 15°C during the dropwise addition. After the dropwise addition was complete, the mixture was kept at 45°C for reaction for 4 h, so that a large amount of pasty solid precipitated from the reaction mixture. After cooling, 1 L of deionized water was slowly added dropwise. The reaction system was scattered by quickly stirring, and filtered. The resulting solid was slurried and washed with deionized water many times until the pH was neutral. The filter cake was dried under reduced pressure at 60°C to obtain an intermediate product.

Step 2: 183.2 g (0.4 mol) of the intermediate product was added into a 4 L three-necked flask, to which 1,000 mL of acetonitrile was added, and 150 mg of a catalyst ruthenium trichloride trihydrate was added. After nitrogen replacement of the system, the system was cooled to 20 °C, to which 2,000 g of 20% aqueous solution of sodium hypochlorite was added dropwise within 1 h while stirring, and the mixture was controlled at a reaction temperature of 10-20°C; after the dropwise addition was complete, the mixture was stirred at 10-20°C for 10 min for liquid separation, and the organic phase was quenched with an aqueous solution of sodium sulfite until the potassium iodide-starch test paper did not turn blue; and after liquid separation again, the organic layer was concentrated, and crystallized with acetonitrile to provide the compound 14.

The preparation methods in the above preparative examples and the preparation method of the compound of the general formula are referred to for the preparation methods of compounds 4-8, 10, and 12-13.

**Example** 1

(1) Preparation of an electrolyte solution: solvents dimethyl carbonate, ethylene carbonate, and ethyl methyl carbonate are mixed, with dimethyl carbonate accounting for 40% by mass of the total mass of the solvents, and the mass ratio of ethylene carbonate to ethyl methyl carbonate being 3:7, and then the additive compound 1 and the electrolyte salt $LiPF_6$ were uniformly dissolved in the above solution to provide the electrolyte solution. In the electrolyte solution, concentration of the $LiPF_6$ is 1 mol/L, and mass content of the compound 1 is 2%.

(2) Preparation of a negative electrode plate: a negative electrode active material graphite, a conductive agent carbon black, a binder styrene butadiene rubber (SBR), and a thickener sodium carboxymethyl cellulose (CMC-Na) at a weight ratio of 90:4:4:2 were dissolved in deionized water, and the mixture was fully mixed to prepare a negative electrode slurry; which was uniformly coated on a negative electrode current collector copper foil once or many times, and then subjected to drying, cold pressing, and cutting, to provide the negative electrode plate.

(3) Preparation of a positive electrode plate: a positive electrode active material $LiNi_{0.8}Co_{0.1}Mn_{0.1}O_2$, a conductive agent acetylene black, and a binder polyvinylidene fluoride (PVDF) at a weight ratio of 90:5:5 were dissolved in a solvent N-methylpyrrolidone (NMP), and the mixture was fully mixed by sufficiently stirring to prepare a positive electrode slurry; which was uniformly coated on a positive electrode current collector, and then subjected to drying, cold pressing, and cutting, to provide the positive electrode plate.

(4) Separator: A conventional polypropylene film was used as the separator.

(5) Assembly of a secondary battery: The positive electrode plate, the separator, and the negative electrode plate mentioned above were sequentially stacked, so that the separator was located between the positive and negative electrode plates to function for separation, and then winded to obtain an electrode assembly; which was transferred into a battery case and dried, into which the electrolyte solution was then injected, followed by the processes such as formation and standing, to provide the secondary battery.

The preparation method of the secondary battery in each of Examples 2-30 and Comparative Examples 1-2 is similar to that in Example 1, except for different product parameters detailed in Table 2. The resistance of the positive

electrode plate was adjusted based on the mass ratio of the conductive agent to the positive electrode active material.

Table 2: Parameter results in Examples 1-30 and Comparative Examples 1-2

| Serial No. | Additive | Mass content of dimethyl carbonate in solvent | Mass content of additive in electrolyte solution | Positive electrode active material | Resistance of positive electrode plate (Ω) | Dv50 particle size of negative electrode active material (μm) |
|---|---|---|---|---|---|---|
| Example 1 | Compound 1 | 40% | 2% | $LiNi_{0.8}Co_{0.1}Mn_{0.1}O_2$ | 0.5 | 18 |
| Example 2 | Compound 2 | 40% | 2% | $LiNi_{0.8}Co_{0.1}Mn_{0.1}O_2$ | 0.5 | 18 |
| Example 3 | Compound 3 | 40% | 2% | $LiNi_{0.8}Co_{0.1}Mn_{0.1}O_2$ | 0.5 | 18 |
| Example 4 | Compound 4 | 40% | 2% | $LiNi_{0.8}Co_{0.1}Mn_{0.1}O_2$ | 0.5 | 18 |
| Example 5 | Compound 5 | 40% | 2% | $LiNi_{0.8}Co_{0.1}Mn_{0.1}O_2$ | 0.5 | 18 |
| Example 6 | Compound 6 | 40% | 2% | $LiNi_{0.8}Co_{0.1}Mn_{0.1}O_2$ | 0.5 | 18 |
| Example 7 | Compound 7 | 40% | 2% | $LiNi_{0.8}Co_{0.1}Mn_{0.1}O_2$ | 0.5 | 18 |
| Example 8 | Compound 8 | 40% | 2% | $LiNi_{0.8}Co_{0.1}Mn_{0.1}O_2$ | 0.5 | 18 |
| Example 9 | Compound 9 | 40% | 2% | $LiNi_{0.8}Co_{0.1}Mn_{0.1}O_2$ | 0.5 | 18 |
| Example 10 | Compound 10 | 40% | 2% | $LiNi_{0.8}Co_{0.1}Mn_{0.1}O_2$ | 0.5 | 18 |
| Example 11 | Compound 11 | 40% | 2% | $LiNi_{0.8}Co_{0.1}Mn_{0.1}O_2$ | 0.5 | 18 |
| Example 12 | Compound 12 | 40% | 2% | $LiNi_{0.8}Co_{0.1}Mn_{0.1}O_2$ | 0.5 | 18 |
| Example 13 | Compound 13 | 40% | 2% | $LiNi_{0.8}Co_{0.1}Mn_{0.1}O_2$ | 0.5 | 18 |
| Example 14 | Compound 14 | 40% | 2% | $LiNi_{0.8}Co_{0.1}Mn_{0.1}O_2$ | 0.5 | 18 |
| Example 15 | Compound 1 | 40% | 0.005% | $LiNi_{0.8}Co_{0.1}Mn_{0.1}O_2$ | 0.5 | 18 |
| Example 16 | Compound 1 | 40% | 10% | $LiNi_{0.8}Co_{0.1}Mng_{0.1}O_2$ | 0.5 | 18 |
| Example 17 | Compound 1 | 10% | 2% | $LiNi_{0.8}Co_{0.1}Mng_{0.1}O_2$ | 0.5 | 18 |
| Example 18 | Compound 1 | 70% | 2% | $LiNi_{0.8}Co_{0.1}Mn_{0.1}O_2$ | 0.5 | 18 |
| Example 19 | Compound 1 | 40% | 2% | $LiNi_{0.8}Co_{0.1}Mn_{0.1}O_2$ | 4 | 18 |
| Example 20 | Compound 1 | 40% | 2% | $LiNi_{0.8}Co_{0.1}Mng_{0.1}O_2$ | 8 | 18 |

(continued)

| Serial No. | Additive | Mass content of dimethyl carbonate in solvent | Mass content of additive in electrolyte solution | Positive electrode active material | Resistance of positive electrode plate (Ω) | Dv50 particle size of negative electrode active material (μm) |
|---|---|---|---|---|---|---|
| Example 21 | Compound 1 | 40% | 2% | $LiNi_{0.8}Co_{0.1}Mn_{0.1}O_2$ | 0.5 | 6 |
| Example 22 | Compound 1 | 40% | 2% | $LiNi_{0.8}Co_{0.1}Mn_{0.1}O_2$ | 0.5 | 20 |
| Example 23 | Compound 1 | 40% | 0.001% | $LiNi_{0.8}Co_{0.1}Mn_{0.1}O_2$ | 0.5 | 18 |
| Example 24 | Compound 1 | 40% | 15% | $LiNi_{0.8}Co_{0.1}Mn_{0.1}O_2$ | 0.5 | 18 |
| Example 25 | Compound 1 | 5% | 2% | $LiNi_{0.8}Co_{0.1}Mn_{0.1}O_2$ | 0.5 | 18 |
| Example 26 | Compound 1 | 80% | 2% | $LiNi_{0.8}Co_{0.1}Mn_{0.1}O_2$ | 0.5 | 18 |
| Example 27 | Compound 1 | 40% | 2% | $LiNi_{0.8}Co_{0.1}Mn_{0.1}O_2$ | 15 | 18 |
| Example 28 | Compound 1 | 40% | 2% | $LiNi_{0.8}Co_{0.1}Mn_{0.1}O_2$ | 0.5 | 3 |
| Example 29 | Compound 1 | 40% | 2% | $LiNi_{0.8}Co_{0.1}Mn_{0.1}O_2$ | 0.5 | 30 |
| Example 30 | Compound 1 | 40% | 2% | $LiNi_{0.96}Co_{0.02}Mn_{0.02}O_2$ | 0.5 | 18 |
| Comparative Example 1 | Comparative compound 1 | 40% | 2% | $LiNi_{0.8}Co_{0.1}Mn_{0.1}O_2$ | 0.5 | 18 |
| Comparative Example 2 | Comparative compound 2 | 40% | 2% | $LiNi_{0.8}Co_{0.1}Mn_{0.1}O_2$ | 0.5 | 18 |

**Material testing and battery testing**

(1) Testing for volume average particle size Dv50:
measured using a laser particle size analyzer model Mastersizer 2000E of Malvern Instruments Ltd with reference to GB/T 19077-2016 Particle size analysis-laser diffraction methods.
(2) Testing for resistance of positive electrode plate:

the secondary battery was charged to a full charge voltage of 4.3V at a constant current of 0.33C, and then charged to a cut-off current of 0.055C at a constant voltage of the full charge voltage, so that the secondary battery reached a fully charged state; the secondary battery was disassembled to provide the positive electrode plate; and the positive electrode plate was transferred into a baking oven at 140°C for 60 min, then cooled to 25°C, sealed, and transferred for testing;
the resistance of the above positive electrode plate at 25°C was tested using a film resistance tester model BER1200 under test conditions of: pressure head area 153.94 $mm^2$, pressure 3.5 t, holding time 50 s. The electrode plate was tested at 15 points with adjacent test points spaced 2 mm-3 mm apart. The resistances at all of the test points were recorded, and the average value was calculated as resistance R of the positive electrode plate.

(3) Testing for DCR:

At room temperature, the secondary battery was charged to 4.3V at a constant current of 1C, then charged to a current of 0.05C at a constant voltage of 4.3V, left to stand for 5 min, discharged at 1C for 30 min (the battery cell was 50% SOC in this case), then left to stand for 5 min, adjusted to a temperature of 25°C, and left to stand for 1 h. The voltage V1 of the battery cell in this case was recorded. The secondary battery was discharged at 4C for 30 s, and the voltage V2 after pulse discharge was recorded. The DCR of the battery cell when it was discharged at 50% SOC for 30 s was calculated according to the following formula;
DCR during discharge at 50% SOC for 30 s=(V1-V2)/I, wherein I=4C.

(4) Testing for cycling performance:

4 secondary batteries from each group in the Examples and the Comparative Examples were repeatedly charged and discharged through the following steps, and the discharge capacity retention rate of the secondary batteries were calculated to get an average value.
At 45°C, each of the secondary batteries was first fully discharged at 1C and then tested. The test process was as follows: at 45°C, the secondary battery was charged to a voltage of 4.3V at a constant current of 1C, then charged to a current of 0.05C at a constant voltage of 4.3V, left to stand for 5 min, and discharged to a voltage of 3.0V at a constant current of 0.5C, which was a charge-discharge cycle process. The discharge capacity in this case was denoted as the first cycle discharge capacity. Then, the charge-discharge cycle was performed, and the 400th cycle discharge capacity was recorded. The capacity retention rate of 400 cycles was calculated according to the following formula;

Capacity retention rate of 400 cycles = (400th cycle discharge capacity/first cycle discharge capacity)×100%.

(5) Testing for storage performance:
At 25°C, the secondary battery was first charged to 4.3V at a constant current of 0.5C, then charged at a constant voltage of 4.3V until the cut-off current of the charging at the constant voltage was 0.05C; then discharged to 3.0V at a constant current of 0.5C, to record the discharge capacity, which was denoted as the initial capacity C0; then charged to 4.3V at a constant current of 0.5C, and then charged at a constant voltage of 4.3V until the cut-off current of the charging at the constant voltage was 0.05C. Then, the secondary battery was stored in a thermostat at 60°C for 15 days. After the storage was complete, the battery was taken out, and re-discharged to 3.0V at a constant current of 0.5C, to record the discharge capacity C1 after storage of the battery, and calculate the residual capacity rate of the battery after storage at a constant temperature of 60°C for 15 days according to the following formula;

residual capacity rate after storage at a constant temperature of 60°C for 15 days=100%×C1/C0.

(6) Testing for aerogenesis in cycles at 45°C:
At 45°C, the secondary battery was tested after being fully discharged at 1C. The test process was as follows: at 45°C, the secondary battery was charged to a voltage of 4.3V at a constant current of 1C, then charged to a current of 0.05C at a constant voltage of 4.3V, and left to stand for 5 min, and then a lithium-ion battery was discharged to a voltage of 3.0V at a constant current of 0.5C, which was a charge-discharge cycle process. The discharge capacity in this case was denoted as the first cycle discharge capacity; and then the charge-discharge cycles were performed for a total of 400 cycles. The battery was tested for the volume $V_1$ before high-temperature cycling by drainage. After the cycling was complete, the battery was taken out, cooled for 8 h, and then tested for the volume $V_2$ of the battery after the cycling. The volume expansion rate of the battery after 400 cycles was calculated according to the following formula;

$$\text{volume expansion rate of the battery after 400 cycles}=(V_2/V_1-1)\times 100\%.$$

The results of the above items (1) to (2) are shown in Table 1, and the results of the above items (3) to (6) are shown in Table 3.

Table 3: Performance test results of Examples 1-30 and Comparative Examples 1-2

| | 50% SOC DCR (mΩ) | Capacity retention rate after 400 cycles | Capacity retention rate after storage for 15D | Volume expansion rate after cycling for 400 cls |
|---|---|---|---|---|
| Example 1 | 12.7 | 93.80% | 96.10% | 4.20% |
| Example 2 | 13.5 | 93.20% | 95.40% | 4.80% |
| Example 3 | 13.3 | 93.45% | 95.72% | 4.51% |
| Example 4 | 14.5 | 93.10% | 95.30% | 4.65% |
| Example 5 | 13.7 | 93.25% | 95.45% | 4.41% |
| Example 6 | 13.3 | 93.50% | 95.70% | 4.35% |
| Example 7 | 13.9 | 93.40% | 95.40% | 4.76% |
| Example 8 | 14.2 | 93.10% | 94.20% | 4.81% |
| Example 9 | 14.5 | 93.20% | 94.30% | 4.72% |
| Example 10 | 13.9 | 93.40% | 95.10% | 4.56% |
| Example 11 | 14.2 | 93.30% | 95.50% | 4.71% |
| Example 12 | 14.50 | 92.90% | 95.20% | 4.74% |
| Example 13 | 14.3 | 93.10% | 95.10% | 4.43% |
| Example 14 | 14.7 | 93.40% | 95.20% | 4.57% |
| Example 15 | 15.1 | 92.70% | 93.30% | 6.50% |
| Example 16 | 14.5 | 93.40% | 95.60% | 4.35% |
| Example 17 | 15.7 | 92.80% | 92.10% | 6.87% |
| Example 18 | 12.4 | 92.50% | 95.10% | 6.94% |
| Example 19 | 13.7 | 93.20% | 95.40% | 4.35% |
| Example 20 | 14.6 | 93.10% | 95.20% | 4.45% |
| Example 21 | 12.5 | 93.40% | 95.70% | 4.58% |
| Example 22 | 14.5 | 93.60% | 96.00% | 4.15% |
| Example 23 | 15.4 | 92.50% | 93.00% | 6.94% |
| Example 24 | 15.10 | 93.20% | 95.50% | 4.54% |
| Example 25 | 16.1 | 92.40% | 92.00% | 6.98% |
| Example 26 | 12.2 | 92.30% | 94.70% | 7.54% |
| Example 27 | 15.2 | 92.70% | 94.60% | 4.76% |
| Example 28 | 12.1 | 93.10% | 95.20% | 4.86% |
| Example 29 | 15.4 | 93.50% | 95.80% | 4.07% |
| Example 30 | 16.8 | 91.60% | 92.70% | 5.06% |
| Comparative Example 1 | 15.8 | 92.30% | 94.30% | 5.18% |
| Comparative Example 2 | 16.7 | 92.10% | 93.80% | 5.32% |

As can be seen from the above results:

compared with Comparative Example 1, each of the batteries in Examples 1-10 of the present application has improved DCR, higher cycling performance, and lower aerogenous quantity in cycles. Compared with Comparative Example 2, each of the batteries in Examples 11-13 of the present application has improved DCR, higher cycling performance, higher storage performance, and lower aerogenous quantity in cycles, showing that the non-aqueous electrolyte solution of the present application can be used to improve the DCR of the battery, improve the cycling performance and the storage performance of the battery, and reduce the aerogenous quantity in cycles of the battery.

Compared with Example 23, each of the batteries in Examples 1 and 15-16 of the present application has improved DCR, higher cycling performance, higher storage performance, and lower aerogenous quantity in cycles.

Compared with Examples 25-26, each of the batteries in Examples 1 and 17-18 of the present application has higher cycling performance and lower aerogenous quantity in cycles. Moreover, the batteries in Examples 1 and 17-18 of the present application have better DCR performance than the battery in Example 25.

Compared with Example 27, each of the batteries in Examples 1 and 19-20 of the present application has improved DCR, higher cycling performance, higher storage performance, and lower aerogenous quantity in cycles.

Compared with Example 28, each of the batteries in Examples 1 and 21-22 of the present application has higher cycling performance, higher storage performance, and lower aerogenous quantity in cycles. Compared with Example 29, the batteries in Examples 1 and 21-22 of the present application have improved DCR. Compared with Example 30, the battery in Example 1 of the present application has improved DCR, higher cycling performance, higher storage performance, and lower aerogenous quantity in cycles.

It should be noted that the present application is not limited to the above embodiments. The above embodiments are only examples, and embodiments that have the same composition and exert the same effect as the technical ideas within the scope of the technical solution of the present application are included in the technical scope of the present application. In addition, without departing from the scope of the subject matter of the present application, various modifications that can be conceived by those skilled in the art are applied to the embodiments, and other modes constructed by combining some of the constituent elements of the embodiments are also included in the scope of the present application.

## Claims

1. A non-aqueous electrolyte solution for a secondary battery, comprising an additive and a non-aqueous solvent, wherein the non-aqueous solvent comprises dimethyl carbonate; and the additive comprises a cyclic sulfate compound represented by formula (I),

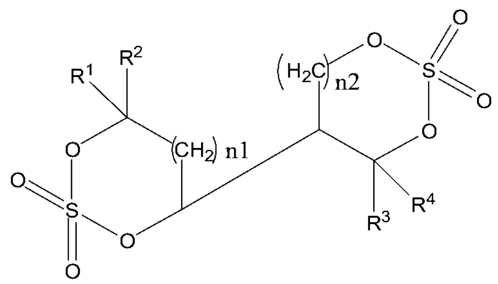

formula (I)

wherein $R^1$, $R^2$, $R^3$, and $R^4$ are each independently selected from any one of a radical having a structure represented by formula (II), a hydrogen atom, a halogen atom, a C1-C6 alkyl, a C1-C6 haloalkyl, a C1-C6 alkoxy, a C1-C6 haloalkoxy, a C2-C6 alkenyl, a C2-C6 ester radical, a cyano, and a sulfonyl, n1 and n2 are each independently any integer of 0-2,

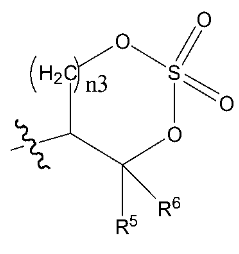

formula (II)

$R^5$ and $R^6$ are each independently selected from any one of a hydrogen atom, a halogen atom, a C1-C6 alkyl, a C1-C6 haloalkyl, a C1-C6 alkoxy, a C1-C6 haloalkoxy, a C2-C6 alkenyl, a C2-C6 ester radical, a cyano, and a

sulfonyl, n3 is any integer of 0-2; and
$R^1$ and $R^2$ are not simultaneously hydrogen atoms, and $R^3$ and $R^4$ are not simultaneously hydrogen atoms;
or $R^1$, $R^2$, $R^3$, $R^4$, $R^5$, and $R^6$ satisfy conditions below:
$R^1$ and $R^2$ are simultaneously hydrogen atoms, one of $R^3$ and $R^4$ is a hydrogen atom, and the other one is any one of a radical having a structure represented by general formula (II), a halogen atom, a C1-C6 alkyl, a C1-C6 haloalkyl, a C1-C6 alkoxy, a C1-C6 haloalkoxy, a C2-C6 alkenyl, a C2-C6 ester radical, a cyano, and a sulfonyl, and $R^5$ and $R^6$ in a radical having a structure represented by general formula (II) are not simultaneously hydrogen atoms;
or $R^1$, $R^2$, $R^3$, $R^4$, $R^5$, and $R^6$ satisfy conditions below:
$R^3$ and $R^4$ are simultaneously hydrogen atoms, one of $R^1$ and $R^2$ is a hydrogen atom, and the other one is any one of a radical having a structure represented by general formula (II), a halogen atom, a C1-C6 alkyl, a C1-C6 haloalkyl, a C1-C6 alkoxy, a C1-C6 haloalkoxy, a C2-C6 alkenyl, a C2-C6 ester radical, a cyano, and a sulfonyl, and $R^5$ and $R^6$ in a radical having a structure represented by general formula (II) are not simultaneously hydrogen atoms.

**2.** The non-aqueous electrolyte solution for a secondary battery according to claim 1, wherein the cyclic sulfate compound has a structure represented by formula (I-1),

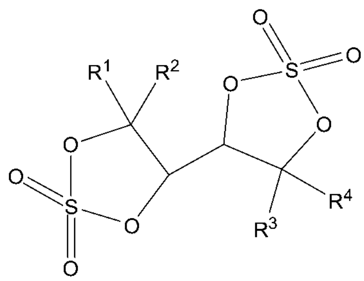

formula (I-1)

$R^1$, $R^2$, $R^3$, and $R^4$ are each independently selected from any one of a radical having a structure represented by formula (II-1), a hydrogen atom, a halogen atom, a C1-C6 alkyl, a C1-C6 haloalkyl, a C1-C6 alkoxy, a C1-C6 haloalkoxy, a C2-C6 alkenyl, a C2-C6 ester radical, a cyano, and a sulfonyl;

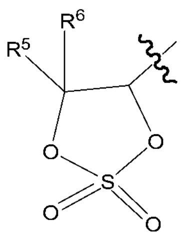

formula (II-1)

and $R^5$ and $R^6$ are each independently selected from any one of a hydrogen atom, a halogen atom, a C1-C6 alkyl, a C1-C6 haloalkyl, a C1-C6 alkoxy, a C1-C6 haloalkoxy, a C2-C6 alkenyl, a C2-C6 ester radical, a cyano, and a sulfonyl.

**3.** The non-aqueous electrolyte solution for a secondary battery according to claim 2, wherein

$R^1$, $R^2$, $R^3$, and $R^4$ are each independently selected from any one of a radical having a structure represented by general formula (II-1), a hydrogen atom, a halogen atom, a C1-C3 alkyl, a C1-C3 haloalkyl, a C1-C3 alkoxy, a C1-C3 haloalkoxy, and a cyano; $R^5$ and $R^6$ are each independently selected from any one of a hydrogen atom, a halogen atom, a C1-C3 alkyl, a C1-C3 haloalkyl, a C1-C3 alkoxy, a C1-C3 haloalkoxy, and a cyano;
optionally, $R^1$, $R^2$, $R^3$, and $R^4$ are each independently selected from any one of a radical having a structure represented by general formula (II-1), a hydrogen atom, a halogen atom, a C1-C3 alkyl, a C1-C3 haloalkyl, a C1-C3 alkoxy, and a cyano; $R^5$ and $R^6$ are each independently selected from any one of a hydrogen atom, a halogen atom, a C1-C3 alkyl, a C1-C3 haloalkyl, a C1-C3 alkoxy, and a cyano;

more optionally, $R^1$, $R^2$, $R^3$, and $R^4$ are each independently selected from any one of a radical having a structure represented by general formula (II-1), a hydrogen atom, a F atom, a Cl atom, a Br atom, a methyl, an ethyl, a propyl, an isopropyl, a trifluoromethyl, an ethoxy, and a cyano; $R^5$ and $R^6$ are each independently selected from any one of a hydrogen atom, a F atom, a Cl atom, a Br atom, a methyl, an ethyl, a propyl, an isopropyl, a trifluoromethyl, an ethoxy, and a cyano; and

further optionally, the radical having a structure represented by general formula (II-1) is selected from any one of radicals below:

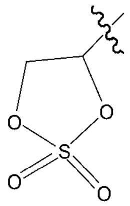 , 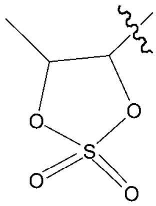 , 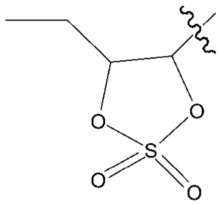 , 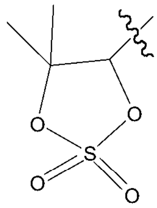 , 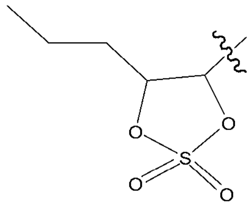 , 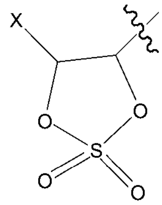 ,

or

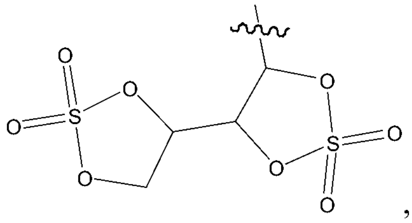 ,

wherein X is a F atom, a Cl atom, or a Br atom.

**4.** The non-aqueous electrolyte solution for a secondary battery according to any one of claims 1 to 3, wherein $R^1$, $R^2$, $R^3$, and $R^4$ are each independently selected from any one of

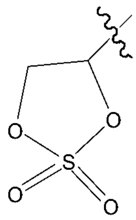 ,

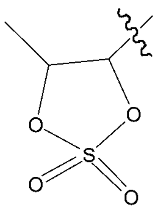 , 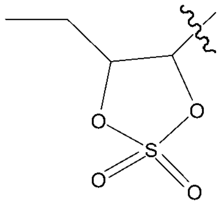 , 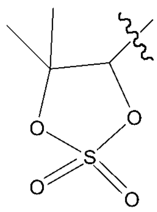 , 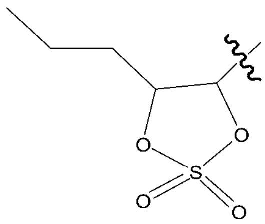 , 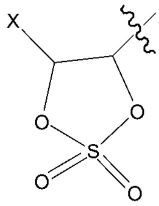 ,

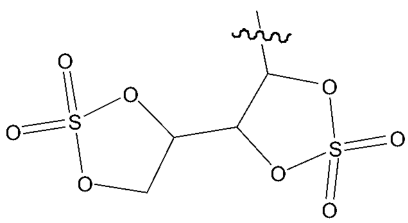 ,

a hydrogen atom, a F atom, a Cl atom, a Br atom, a methyl, an ethyl, a propyl, an isopropyl, a trifluoromethyl, an ethoxy, and a cyano, and the X is a F atom; and

optionally, $R^1$, $R^2$, $R^3$, and $R^4$ are each independently selected from any one of

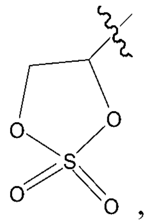,

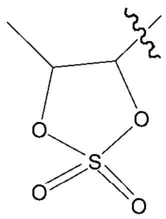, 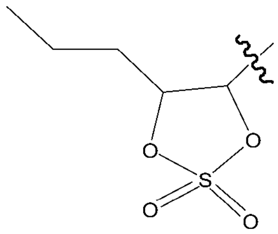, 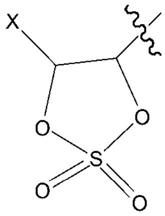, 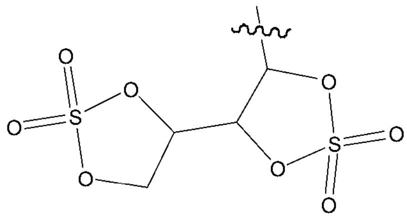,

a hydrogen atom, a F atom, a methyl, an ethyl, a propyl, a trifluoromethyl, an ethoxy, and a cyano, and the X is a F atom.

5. The non-aqueous electrolyte solution for a secondary battery according to any one of claims 1 to 4, wherein the cyclic sulfate compound is selected from compounds below:

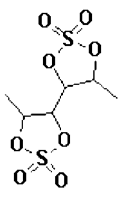 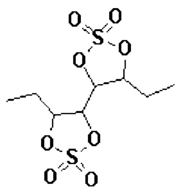 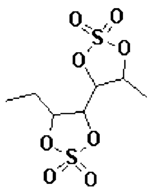 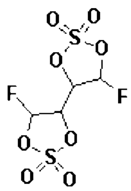 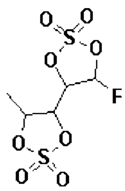

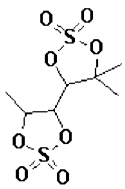 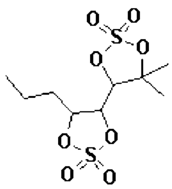 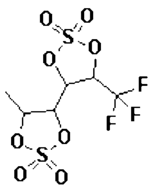 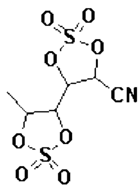 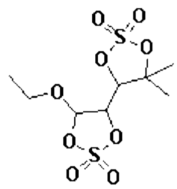

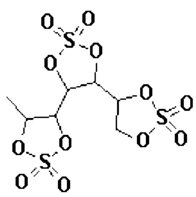 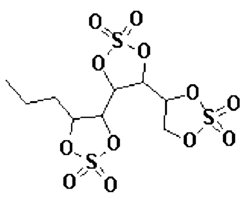 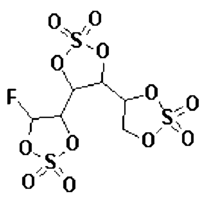 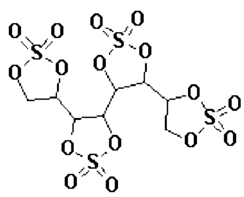.

6. The non-aqueous electrolyte solution for a secondary battery according to any one of claims 1 to 5, wherein mass content of the additive in the non-aqueous electrolyte solution is 0.001%-15%, optionally 0.005%-10%, more optionally 0.05%-5%.

7. The non-aqueous electrolyte solution according to any one of claims 1 to 6, wherein mass content of the dimethyl carbonate in the non-aqueous solvent is 5%-80%, optionally 10%-70%, more optionally 20%-50%.

8. A secondary battery, comprising the non-aqueous electrolyte solution for a secondary battery according to any one of

claims 1 to 7, a positive electrode plate, and a negative electrode plate, wherein the negative electrode plate comprises a negative electrode active material; and optionally, the secondary battery is a lithium secondary battery.

**9.** The secondary battery according to claim 8, wherein resistance of the positive electrode plate is less than or equal to 15 Ω, optionally less than or equal to 8 Ω.

**10.** The secondary battery according to claim 8 or 9, wherein volume average particle size Dv50 of the negative electrode active material is 3-30 μm, optionally 6-20 μm, more optionally 8-15 μm.

**11.** The secondary battery according to any one of claims 8 to 10, wherein the positive electrode plate comprises a positive electrode active material; and
optionally, the positive electrode active material comprises $Li_{1+x}Ni_aCo_bM_{1-a-b}O_{2-y}A_y$; wherein M comprises one or more elements among Mn, Fe, Cr, Ti, Zn, V, Al, Zr, Ce, Mg, Ga, Cu, and Nb, and optionally comprises one or two elements of Mn and Al; A comprises one or more elements among S, F, Cl, and I, and optionally comprises one or two elements of S and F; $-0.1 \le x \le 0.2$; $0 < a < 1$, optionally $0.5 \le a < 1$, more optionally $0.7 \le a \le 0.9$; $0 < b < 1$, optionally $0 < b < 0.5$, more optionally $0 < b \le 0.2$; $0 < a+b < 1$; and $0 \le y < 0.2$.

**12.** An electrical apparatus, comprising the non-aqueous electrolyte solution for a secondary battery according to any one of claims 1 to 7 or the secondary battery according to any one of claims 8 to 11.

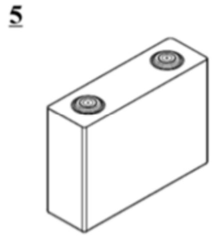


FIG. 1

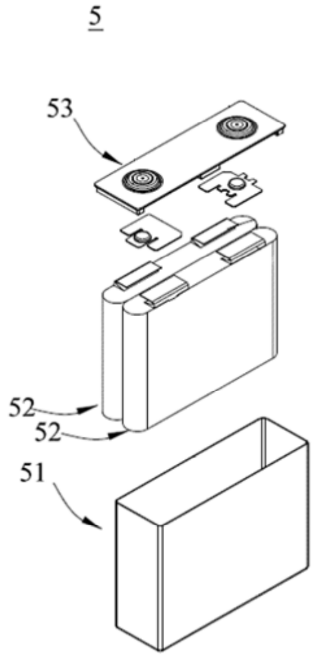


FIG. 2

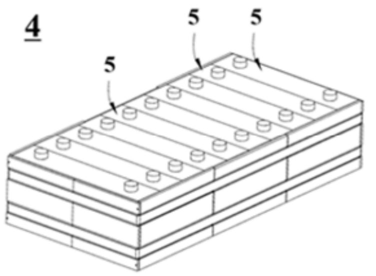


FIG. 3

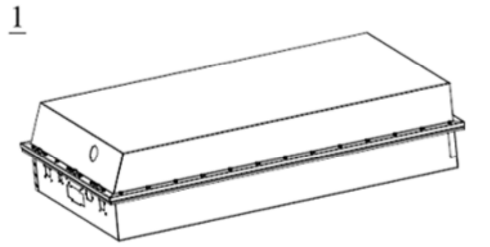


FIG. 4

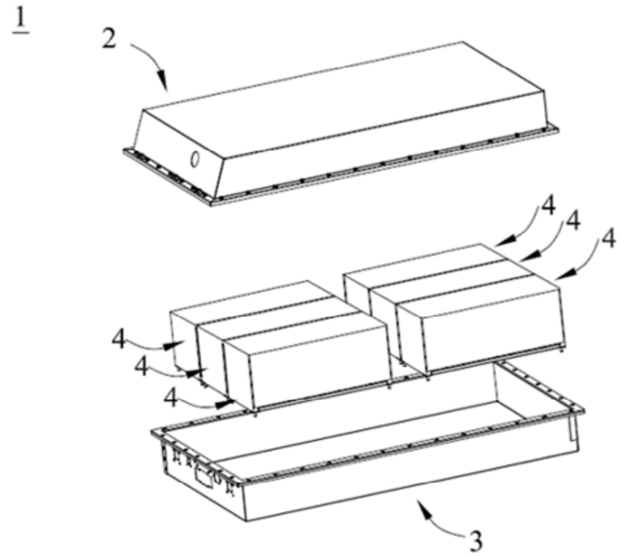


FIG. 5

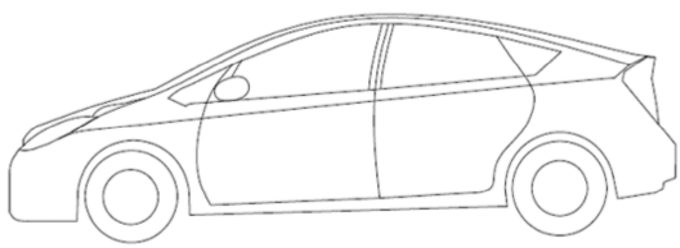

FIG. 6

**INTERNATIONAL SEARCH REPORT**

International application No.
**PCT/CN2023/097802**

**A. CLASSIFICATION OF SUBJECT MATTER**

H01M10/0567(2010.01)i; H01M10/0569(2010.01)i; H01M10/0525(2010.01)i

According to International Patent Classification (IPC) or to both national classification and IPC

**B. FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNABS; CNTXT; DWPI; VEN; ENTXT; CNKI: 锂离子电池, 电解液, 添加剂, 环状硫酸酯, 碳酸二甲酯, lithium ion battery, electrolyte, additive, cyclic sulfate, dimethyl carbonate

**C. DOCUMENTS CONSIDERED TO BE RELEVANT**

| Category* | Citation of document, with indication, where appropriate, of the relevant passages | Relevant to claim No. |
|---|---|---|
| E | CN 116936930 A (ZHEJIANG RESEARCH INSTITUTE OF CHEMICAL INDUSTRY CO., LTD. et al.) 24 October 2023 (2023-10-24)<br>description, paragraphs 2-90 | 1-6, 8, 11-12 |
| X | CN 115810794 A (ZHEJIANG RESEARCH INSTITUTE OF CHEMICAL INDUSTRY CO., LTD. et al.) 17 March 2023 (2023-03-17)<br>description, paragraphs 7-138 | 1-12 |
| X | CN 115117446 A (MITSUI CHEMICALS, INC. et al.) 27 September 2022 (2022-09-27)<br>description, paragraphs 68-296 and 319 | 1-12 |
| A | CN 108701864 A (CENTRAL GLASS CO., LTD.) 23 October 2018 (2018-10-23)<br>entire document | 1-12 |
| A | WO 2017138453 A1 (CENTRAL GLASS CO., LTD.) 17 August 2017 (2017-08-17)<br>entire document | 1-12 |

☐ Further documents are listed in the continuation of Box C.　　☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **29 January 2024** | **01 February 2024** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**
**Information on patent family members**

International application No.
**PCT/CN2023/097802**

| Patent document cited in search report | | | Publication date (day/month/year) | Patent family member(s) | | | Publication date (day/month/year) |
|---|---|---|---|---|---|---|---|
| CN | 116936930 | A | 24 October 2023 | None | | | |
| CN | 115810794 | A | 17 March 2023 | None | | | |
| CN | 115117446 | A | 27 September 2022 | None | | | |
| CN | 108701864 | A | 23 October 2018 | JPWO | 2017138452 | A1 | 06 December 2018 |
| | | | | JP | 6955165 | B2 | 27 October 2021 |
| | | | | WO | 2017138452 | A1 | 17 August 2017 |
| | | | | KR | 20180108796 | A | 04 October 2018 |
| | | | | KR | 20210013779 | A | 05 February 2021 |
| | | | | KR | 102391374 | B1 | 27 April 2022 |
| | | | | US | 2021020992 | A1 | 21 January 2021 |
| | | | | US | 11302964 | B2 | 12 April 2022 |
| | | | | EP | 3416229 | A1 | 19 December 2018 |
| | | | | EP | 3416229 | B1 | 13 May 2020 |
| | | | | CN | 115101816 | A | 23 September 2022 |
| WO | 2017138453 | A1 | 17 August 2017 | JP | 2019057356 | A | 11 April 2019 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- GB T190772016 A


### Non-patent literature cited in the description


- *CHEMICAL ABSTRACTS*, 7460-93-7